# EUROPEAN PATENT APPLICATION

(11) **EP 4 667 811 A1**
(43) Date of publication of application: **24.12.2025**
(21) Application number: 25183124.4
(22) Date of filing: 16.06.2025
(51) Int. Cl.: F17C 3/00, F17C 3/08

(54) **SYSTEMS AND METHODS FOR BUILDING PRESSURE WHEN USING LOW PRESSURE LIQUID HYDROGEN STORAGE**

(30) Priority: 20.06.2024 US 202463662261 P
(71) Applicant: Cummins, Inc., Columbus, Indiana 47201 (US)
(72) Inventor: Higgins, Russell Hiatt, Seattle, 98104 (US); Raymond, Jordan, Seattle, 98104 (US); Wolflick, John David, Seattle, 98104 (US)
(74) Representative: Cleveland Scott York

(57) **Abstract**

A system and method for hydrogen storage, and delivery. The system includes a hydrogen storage tank, a first pump disposed within the hydrogen storage tank, and a second pump disposed outside of the hydrogen storage tank. The hydrogen storage tank is to store gaseous hydrogen and liquid hydrogen. The first pump is to pump out liquid hydrogen out of the storage tank, producing a low pressure flow. The second pump is to receive this low pressure flow and produces a high pressure flow of liquid hydrogen. The system can also include a thermal device disposed within the hydrogen storage tank to heat gaseous hydrogen when a pressure within the hydrogen storage tank drops below a predetermined minimum pressure. The system can also include a heat exchanger to receive the high pressure flow of liquid hydrogen from the second pump.

## Description

### CROSS-REFERENCE TO RELATED APPLICATIONS

The present application claims the benefit of and priority to U.S. Provisional Application No. 63/662,261, filed June 20, 2024.

### BACKGROUND

Embodiments herein relate to systems and methods for storing, transporting, and delivering hydrogen fuel for large-scale industrial applications, particularly for oversized vehicles. These systems are to increase the pressure of liquid hydrogen from a storage tank to a high pressure feed suitable for onboard power systems.

To mitigate the progression of climate change, there is an increasing momentum to reduce global greenhouse gas emissions. This shift involves transitioning away from fossil fuels, which are the primary energy source for most vehicles, in all types of transportation, e.g., road, aerospace and aviation, railway, and maritime. To address this issue, significant efforts are being made to adopt alternative and renewable energy sources, such as hydrogen-powered fuel cells. Hydrogen is particularly appealing as it can be produced using renewable energy, is nearly unlimited, and its primary by-product is water, making it a promising alternative to fossil fuels.

However, storing sufficient hydrogen in onboard hydrogen storage systems, maintaining sufficient hydrogen levels for long-term vehicle operation, and delivering hydrogen from storage tanks on vehicles to power systems (e.g., fuel cells, hydrogen internal combustion engines, etc.) remains a significant hurdle for hydrogen-powered vehicles.

### SUMMARY

Embodiments described herein relate to systems and methods for storing liquid hydrogen on a vehicle, and delivering a flow of hydrogen (e.g., LH₂, hydrogen gas, blends that include hydrogen gas and/or LH₂) to vehicle power systems. The systems and methods described herein are adaptable to various transportation modes including road, aerospace, aviation, railway, and maritime. In some embodiments, the systems and methods provided herein can be implemented to a haul truck, e.g., a haul truck to operate at a mining site.

In some embodiments, a system, such as a system for storage hydrogen pressure management, includes a hydrogen storage tank to store liquid hydrogen. The hydrogen storage tank defines an inner volume having a first portion and a second portion. The system further includes a first pump disposed within the second portion of the inner volume, and a second pump disposed outside of the hydrogen storage tank. The first pump is to receive liquid hydrogen from the second portion of the inner volume when liquid hydrogen is stored in the hydrogen storage tank and to pump the liquid hydrogen out of the hydrogen storage tank to produce a low pressure flow of liquid hydrogen. The second pump is to receive the low pressure flow of liquid hydrogen from the first pump and to produce a high pressure flow of liquid hydrogen. In some embodiments, the low pressure flow of liquid hydrogen has a pressure between about 2 bar and about 10 bar. In some embodiments, the high pressure flow of liquid hydrogen has a pressure between about 20 bar to about 450 bar. In some embodiments, the hydrogen storage tank is configured such that the second portion of the inner volume is below the first portion of the inner volume.

The system may further include a heat exchanger (e.g., an evaporator and/or any suitable heat exchanger) disposed outside of the hydrogen storage tank. The heat exchanger is to receive the high pressure flow of liquid hydrogen from the second pump and to provide a flow of hydrogen gas to a hydrogen-powered energy producing system, e.g., hydrogen fuel cells, a hydrogen internal combustion engine, and/or the like. In some embodiments, the heat exchanger is to receive the high pressure flow of liquid hydrogen from the second pump and to provide a flow of hydrogen gas to one or more hydrogen fuel cells (e.g., a high pressure flow of hydrogen gas). In some embodiments, the heat exchanger is further to provide a flow of gaseous hydrogen back to the hydrogen storage tank (e.g., a low pressure flow of hydrogen gas).

The system may further include a thermal device disposed within the first portion of the inner volume. The thermal device can be affixed to at least one inner wall of the hydrogen storage tank. In some embodiments, the thermal device is an induction heater. In some embodiments, the thermal device can be to produce thermal energy operable to heat gaseous hydrogen contained in the first portion of the inner volume of the hydrogen storage tank to maintain a pressure within the inner volume above a predetermined pressure value.

In some embodiments, the system may be implemented in and/or on a heavy equipment vehicle such as a mining haul truck. The vehicle includes a deck or platform between a cab and at least one wheel. In some embodiments, the hydrogen storage tank is mounted to and/or otherwise mounted below the platform in a space between the front wheels.

In some embodiments, a method includes expanding hydrogen gas disposed in a first portion of an inner volume of a storage tank to maintain an internal pressure of the storage tank above a predetermined pressure value. The method further includes conveying a flow of liquid hydrogen from a second portion of the inner volume of the storage tank to a volume outside of the storage tank via a first pump to produce a low pressure flow of liquid hydrogen. The second portion of the inner volume is below the first portion of the inner volume. The low pressure flow of liquid hydrogen from the first pump is received at a second pump to produce a high pressure flow of liquid hydrogen. The high pressure flow of liquid hydrogen is conveyed to a heat exchanger to produce a flow of hydrogen gas. The flow of hydrogen gas is conveyed to a power module including a plurality of hydrogen fuel cell. The method further includes producing electric energy via the power module. In some embodiments, the flow of hydrogen gas conveyed to the power module is a high pressure flow of hydrogen gas while a low pressure flow of hydrogen gas is conveyed back to the storage tank.

In some embodiments, the method may further include mounting the storage tank to a mining haul truck prior to expanding hydrogen gas disposed in a first portion of an inner volume of a storage tank. The mining haul truck to be operated at a mining site. In some implementations, the power module can provide electric power to one or more portions of the haul truck.

In some embodiments, expanding hydrogen gas includes heating hydrogen gas disposed in the first portion of the inner volume of the storage tank. In some embodiments, expanding hydrogen gas includes receiving hydrogen gas from a vapor delivery line into the first portion of the inner volume of the storage tank via a port that is disposed on a top portion of the storage tank and in fluid communication with the first portion of the inner volume.

### BRIEF DESCRIPTION OF THE DRAWINGS

FIG. 1 is a block diagram of a storage and fuel delivery system to store a cryogenic liquid, according to an embodiment.
FIG. 2 is schematic illustrations of a storage and fuel delivery system, according to an embodiment.
FIG. 3 is schematic illustrations of a storage and fuel delivery system, according to an embodiment.
FIG. 4 is schematic illustrations of a storage and fuel delivery system, according to an embodiment.
FIG. 5 is schematic illustrations of a storage and fuel delivery system, according to an embodiment.
FIG. 6A is schematic illustration showing a side perspective view of a haul truck including
   a storage and fuel delivery system, according to an embodiment.
FIG. 6B is a schematic illustration of a hydrogen storage tank included in the storage and fuel delivery system shown in FIG. 6A.
FIG. 7 is a flow chart illustrating a method for implementing a hydrogen fuel cell power system in a mining vehicle, according to an embodiment.

### DETAILED DESCRIPTION

Embodiments described herein pertain to hydrogen fuel storage and delivery systems for large-scale industrial applications, specifically for heavy equipment vehicles that exceed highway size constraints. These systems can deliver, to a power system, a high pressure flow of hydrogen fuel (for example, at least about 20 bar) from an onboard liquid hydrogen storage tank, which maintains an internal pressure below, for example, 10 bar. The systems and methods provided herein are designed to deliver hydrogen to onboard power systems (e.g., fuel cells, hydrogen internal combustion engines, etc.) at the appropriate and/or desired inlet pressure and temperature for operation. This disclosure addresses the challenge of maintaining low pressure within a storage tank designed to store liquid hydrogen (LH₂), while simultaneously meeting the high pressure requirements of hydrogen fueled power systems.

. Traditional vehicle hydrogen storage systems use high pressure hydrogen storage cylinders, which present significant drawbacks such as a large volume (e.g., up to 200-300 liters (L)), and heavy weight (e.g., up to 100-200 kilograms (kg)), restricting the range and economy of fuel cell vehicles. In addition, challenges associated with existing liquid hydrogen (LH₂) storage systems include increased tank wall thickness and thermal mass, which limit the practical, mass-efficient tank diameter and geometry when scaling to sizes suitable for use in, for example, ultra-class vehicles with large hydrogen fuel tanks.

Liquid hydrogen's high density (71 kilograms per cubic meter (kg/m³)) at ambient pressure is an advantage that makes liquefaction one of the preferred approaches to distribute and store H₂ throughout the vehicle infrastructure despite the high energy and cost of liquefaction. LH₂ can be stored in thermally insulated tanks at a temperature lower than its boiling point at a given pressure to maintain its liquid state. Given the low temperatures, these storage tanks undergo continuous cooling (e.g., to about 20 Kelvin (K) or about -253°C or below at a pressure of 1 bar) and need to be well-insulated from the surrounding environment. As a result, vehicle storage tanks are typically designed not to withstand internal pressure but to contain cryogenic liquid, necessitating effective insulation to minimize heat transfer. Despite these precautions, some hydrogen inevitably escapes due to imperfect insulation, evaporation, or vents through relief valves to maintain an internal pressure of the storage tank. This poses a challenge in maintaining sufficient hydrogen levels for long-term vehicle operation.

In addition, the delivery of LH₂ from onboard storage tanks to the power systems presents a technical challenge due to the divergent pressure requirements. While low pressure is desirable for LH₂ storage and refueling (e.g., to maintain its cryogenic liquid state), power systems typically operate more efficiently at higher pressures to enhance efficiency, energy density, and/or overall performance. Cryogenic pumps and compressors have been used to boost this low pressure liquid hydrogen into a high pressure state suitable for use in vehicle power systems. However, the use of traditional pumping methods, that often rely on centrifugal or other mechanical pumps, struggle with the unique properties of liquid hydrogen, creating challenges related to cavitation, vapor lock, and heat transfer. In addition, the unique thermodynamic properties at the temperature and pressure range for storage make it challenging to store and effectively deliver at operational pressure.

Systems and methods as described herein can provide for onboard hydrogen infrastructure that offers storage and distribution convenience comparable or beneficial relative to the existing fossil fuel infrastructure.

In some embodiments, a multi-stage pressure building system includes a storage tank to store LH₂, under a low pressure, e.g., near atmospheric pressure, generally in a saturated state. When filled with LH₂, the storage tank includes and/or defines an amount of headspace that includes and/or receives a vapor or gaseous hydrogen above the volume of liquid hydrogen. The storage tank defines an inner volume having a first portion and a second portion. In some embodiments, the second portion of the inner volume is below the first portion of the inner volume when the hydrogen storage tank is installed on a vehicle operating on or above sea level. The headspace is to be present in the first portion of the inner volume while the second portion of the inner volume is to contain and/or store the LH₂. Systems and methods in accordance with the present disclosure can operate on blends that include hydrogen gas, LH₂, and one or more additional fluids, e.g., one or more additional liquid and/or gaseous fuels. Systems and methods in accordance with the present disclosure can be implemented for any of a variety of vehicle or stationary applications, including, for example and without limitation, mining, marine, or multiple tank and/or multiple pump system applications.

In some embodiments, the system may include a heat source such as an induction heater disposed within the headspace, and affixed to at least one inner wall of the storage tank. The heat source is to heat the vapor or gaseous hydrogen present in the headspace, thereby causing expansion and a rise in tank pressure without increasing the temperature of the liquid hydrogen stored in the storage tank. This results in the liquid hydrogen at the bottom of the tank being in a subcooled state, which in turn, raises its net positive suction head available (NPSHa). For example, by facilitating the liquid hydrogen being in the subcooled state, the heat source can allow for lowered pressure of the liquid hydrogen, which can allow for reduced size of the first pump.

The system includes a first pump (e.g., a centrifugal pump and/or the like), disposed in the second portion of the inner volume of the storage tank. The first pump is suitable for low speeds (e.g., less than 1,200 revolutions per minute (rpm)) and high turndown ratios (e.g., 10:1 or greater). The first pump can be semi-permanently or permanently installed in a bottom portion of the tank allowing the first pump to be submerged in the LH₂. The first pump can be to intake the subcooled liquid at the bottom portion of the storage tank (e.g., the second portion of the inner volume) and boost its pressure by at least a few bar. The discharge of the first pump is routed up and out of the storage tank, avoiding the need for any tank penetrations in the bottom portion of the storage tank, which is desirable to avoid heat transfer from the environment.

The system further includes a second pump (e.g., a positive displacement pump such as an axial piston pump, vane pump, gear pump, or similar pump(s)) mounted in close proximity to the first pump's discharge line as it exits the storage tank. The second pump can be to boost a pressure of the LH₂ to dozens or even hundreds of bar of pressure suitable for use by the power system (e.g., fuel cell system, hydrogen internal combustion engines, etc.). The heat load of the second pump and its motor is kept isolated from the liquid hydrogen in the storage tank by mounting the pump outside of the storage tank.

The size and displacement associated with the low pressure storage tank is reduced compared to systems with similar capabilities without a risk of cavitation by relying on the first pump to boost net positive suction head (NPSH), enabling the second pump to operate at higher speed. The first pump also ensures a reliable flow of liquid to the second pump. System controls can be used to detect vapor ingestion at the first pump and react to protect the second pump from receiving vapor, which could have adverse impacts on the second pump operating at higher rpms. Thus, the multi-stage pressure building approach described herein can provide a compact and lightweight solution while still being resilient to cavitation and vapor lock.

The storage and refueling of LH₂ pose challenges, primarily due to the need for maintaining temperature conditions to keep hydrogen in its liquid state. Conversely, some known hydrogen fueled power systems require higher pressures for efficient operation. Traditional approaches for building pressure often involve mechanical pumps, yet these systems often grapple with issues such as cavitation and vapor lock, rendering them unreliable. Cavitation, the formation of vapor bubbles within the pump, can lead to damage and inefficiency, while vapor lock can interrupt the flow of hydrogen.

Some solutions have attempted to overcome these challenges by using a low-rpm (e.g., less than 1,200 rpm) large piston pumps submerged in a storage tank. This design minimizes cavitation and vapor lock by maintaining a consistent, low-speed operation and leveraging the low displacement to reduce turbulence and vapor formation. However, the mass and volume of these large piston pumps are substantial, adding to the overall weight and space requirements, which may not be suitable for implementation with a vehicle. Moreover, the need for these pumps to be submerged within the cryogenic environment of the fuel tank introduces additional thermal management challenges, as the operation of these pumps inherently increases the heat leak into the liquid hydrogen. This added thermal load can cause the LH₂ to vaporize prematurely, reducing the efficiency of the storage and delivery system.

In contrast, the systems and methods described here offer several advantages. They are lighter than similar pressure-building systems and reduce heat leakage into the liquid hydrogen by placing most of the heat producing components outside the storage tank. In some implementations, this may eliminate the need for penetrations in the bottom portion of the tank. These systems can be adapted for various transportation modes, including road, aerospace, aviation, railway, and maritime sectors. They also increase a vehicle's operational range by enhancing the efficiency of the hydrogen storage and delivery systems.

As the size of a hydrogen storage tank increases and as a larger portion of a vehicle's total mass is used for energy storage, a hydrogen fuel storage/delivery system becomes more sensitive to pressures within the hydrogen storage tank. Larger diameters at higher pressures lead to a substantial increase in the thickness of the tank wall, and consequently, its mass. This issue is mitigated by using the multi-stage pressure building approach according to embodiments described herein.

An advantage of the embodiments provided herein is the reduction of pump mass and volume. The pumps in some known systems are bulky and heavy, extending from the top to the bottom of the tank. Such pumps often have extended lengths in order to provide thermal separation between the driving end of the pump and the cold end of the pump, which are mechanically coupled. They have very large piston displacements that operate at very low rpms to avoid cavitation as a result of low to near zero NPSH. This design leads to a considerable amount of heat leakage, as the pump performs a substantial amount of work inside the tank, which can result in heat being dissipated into the stored liquid hydrogen. The systems and methods described herein address this issue by positioning most of the pumping mechanism outside the storing tank.

The embodiments described herein can also enhance pump and/or overall system efficiency. By including different pumps (e.g., a first pump and a second pump) in the system as described herein, the efficiency is optimized while keeping most of the system components outside of the storage. The relatively small/compact first pump is capable of reliably delivering high NPSH liquid to the larger/higher displacing second pump. Accordingly, the size of the second pump, which generally boasts a high efficiency (e.g., about 80% or more), is significantly reduced in size due to the pressure boost and high NPSH provided by the first pump.

In some embodiments, the system can be designed to provide some NPSH to the first pump, which may reduce or eliminate the need for an inducer. This is achieved through an internal heater mounted to the top of the tank, which provides enough subcooling of the liquid by superheating the vapor disposed in the headspace of the storage tank to drive overall internal pressurization. As a result, an inducer is not required, allowing for a much broader turndown range in the pump. This is a significant advantage as reliance on inducers typically significantly inhibits turndown. Thus, the multi-stage pressure building approach according to the embodiments presented herein can optimize efficiency, reduce size, broaden operational range(s), and/or the like.

The terminology used herein is for the purpose of describing particular embodiments only and is not intended to limit the full scope of any embodiment and/or the full scope of the claims. Unless defined otherwise, all technical, industrial, and/or scientific terms used herein are intended to have the same meaning as commonly understood by one of ordinary skill in the art.

As used herein, the singular forms "a," "an," and "the" are intended to include the plural forms as well, unless the context clearly indicates otherwise. With respect to the use of singular and/or plural terms herein, those having skill in the art can translate from the singular to the plurality and/or vice versa as is appropriate for the context and/or application. Furthermore, any reference herein to a singular component, feature, aspect, etc. is not intended to imply the exclusion of more than one such component, feature, aspect, etc. (and/or vice versa) unless expressly stated otherwise.

As used herein, the terms "substantially," "approximately," and "about" used throughout this Specification and the claims generally mean plus or minus 10% of the value stated, e.g., about 100 would include 90 to 110.

In general, terms used herein and in the appended claims are generally intended as "open" terms unless expressly stated otherwise. For example, the term "including" should be interpreted as "including but not limited to," the term "having" should be interpreted as "having at least," etc. Similarly, the term "comprising" may specify the presence of stated features, elements, components, integers (or fractions thereof), steps, operations, and/or the like but does not preclude the presence or addition of one or more other features, elements, components, integers (or fractions thereof), steps, operations, and/or the like unless such combinations are otherwise mutually exclusive.

As used herein the term "and/or" includes any and all combinations of one or more of the associated listed items. It should be understood that any suitable disjunctive word and/or phrase presenting two or more alternative terms, whether in the written description or claims, contemplate the possibilities of including one of the terms, either of the terms, or both terms. For example, the phrase "A and/or B" will be understood to include the possibilities of "A" alone, "B" alone, or a combination of "A and B."

All ranges described herein include each individual member or value of the listed range, including the end members or values. Any listed ranges are intended to encompass any and all possible subranges and combinations of subranges thereof unless expressly stated otherwise. Any listed range should be recognized as sufficiently describing and enabling the same range being broken down into at least equal subparts unless expressly stated otherwise.

Embodiments described herein relate generally to LH₂ storage systems and delivery of hydrogen to onboard hydrogen-powered energy producing systems, e.g., hydrogen fuel cells, hydrogen internal combustion engines, etc., at a suitable pressure and temperature. In some embodiments, the systems and methods described herein can be specifically tailored for delivering a flow of hydrogen (liquid or gas) to hydrogen-powered energy producing systems. For example, embodiments described herein can be used to provide hydrogen to hydrogen fuel cells in heavy, industrial equipment and/or vehicles such as mining trucks, earthmovers, etc.

The systems, methods, and principles described herein configured for storing and delivering fuel for hydrogen fuel cells, can also be adapted for use with hydrogen-based internal combustion engines.

The embodiments and methods described can be implemented to vehicles used for any suitable large-scale industry. For example, one such industry is mining. In some implementations, any of the systems and/or methods described herein can be used in vehicles to operate at a mining site, including the ability to move around rough, unfinished, and/or steep surfaces typically found at a mining site. While embodiments and/or methods may be described herein as being implemented in and/or for the mining industry, it should be understood that such an implementation is provided by way of example only and not limitation. Any of the embodiments and/or methods described herein can be used in any suitable industry including, but not limited to the rail industry, the shipping/cargo industry, the aerospace industry, the large-scale construction/fabrication industry (e.g., of large ocean vessels, etc.), and/or any other suitable industry.

In some embodiments, the systems and methods described herein may be to have a hydrogen storage and/or delivery capacity enabling greater utilization of hydrogen-powered equipment such as mining haul trucks than are otherwise possible using known hydrogen storage and/or delivery systems. In some implementations, for example, the systems and methods described herein can support continuous or substantially continuous use of hydrogen-powered equipment, 24 hours a day, 7 days a week. In some implementations, the systems and methods described herein can support utilization of hydrogen-powered equipment of greater than about 80% utilization within a period of 24 hours of continuous or substantially continuous use (e.g., total available capacity minus non-active or non-value-adding use like time associated with refueling, crew changes, and/or other inefficiencies).

While various implementations described herein are generally described with respect to vehicles such as mining vehicles, it should be appreciated that the concepts described herein are equally applicable to any other application where hydrogen power is desired including, but not limited to, rail, maritime, or stationary hydrogen power solutions. In such implementations, the storage tanks and the pressure building system described herein may be disposed in different locations based on the structural, functional, and spatial needs of the underlying architecture. All such implementations are contemplated and should be considered to be within the scope of the present disclosure.

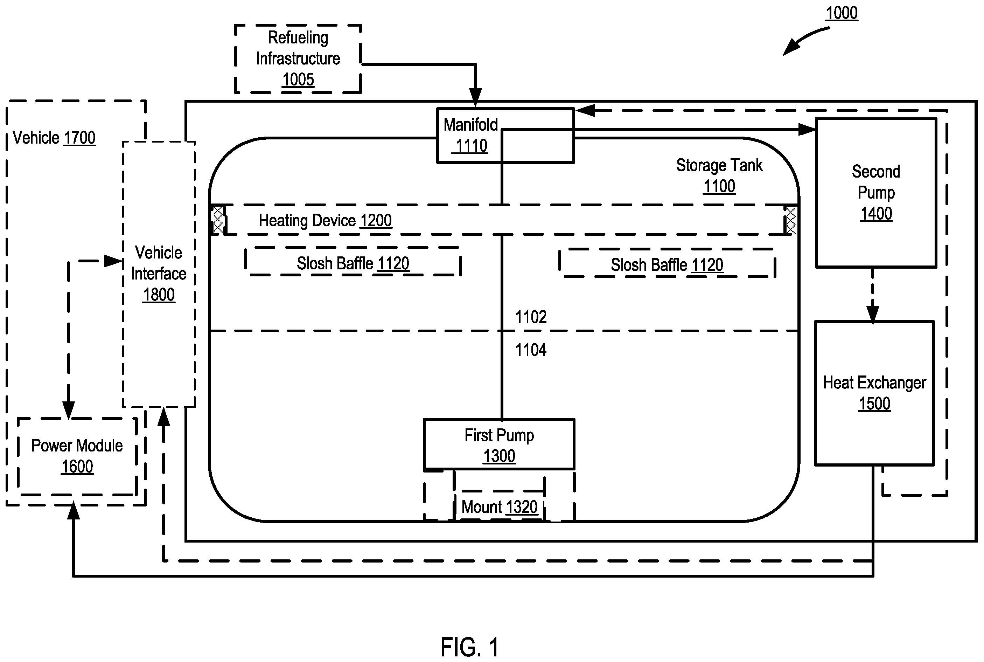

FIG. 1 is a block diagram showing components of a storage and fuel delivery system 1000, according to an embodiment. The storage and fuel delivery system 1000 ("system 1000") includes a storage tank 1100 defines an inner volume to store a cryogenic or subcooled liquid, e.g., liquid hydrogen. As used herein, the term "cryogenic liquid" refers to a liquefied gas maintained in a liquid state. Cryogenic liquids have boiling points typically below 120 K or -153°C (-243.4°F). As used herein, the term "subcooled liquid" refers to a liquid that is at a temperature below its boiling point at a given pressure. For instance, at atmospheric pressure (i.e., 760 millimeters of mercury (mmHg)), hydrogen's boiling point is approximately 20 K or approximately -253°C (-423.2°F). Therefore, hydrogen would be considered a subcooled liquid at atmospheric pressure and a temperature of 20 K. On the other hand, at 16 bar, hydrogen's boiling point is approximately 28 K or approximately -245°C (-409°F).

As used herein, while a subcooled liquid can be a cryogenic liquid, it is not necessarily so; however, a cryogenic liquid is a subcooled liquid. Both cryogenic and subcooled liquids are maintained at temperatures below their boiling points, but cryogenic fluids are distinguished by their extremely low temperatures (e.g., below 120 K or -153°C (-243.4°F)) and require specialized handling and storage techniques. In contrast, subcooled liquids are kept below their boiling points at a given pressure but do not necessarily reach cryogenic temperatures. Embodiments described herein are to store and deliver fuel for hydrogen fuel cells, or hydrogen internal combustion engines, and thus, the cryogenic liquid is liquid hydrogen. It should be understood, however, that the systems, methods, and/or principles described herein, however, can be applied to any suitable cryogenic liquid.

The storage tank 1100, when storing the cryogenic liquid, is configured such that a portion of the inner volume forms and/or includes a headspace (not shown) to include a vapor above the cryogenic liquid. For example, the storage tank 1100 is configured such that a first portion 1102 of the inner volume stores a gaseous hydrogen, and a second portion 1104 of the inner volume stores the liquid hydrogen. In some embodiment, the storage tank 1100 is to store LH₂ in the second portion 1104 at about -253°C. In some embodiments, the storage tank 1100 is to store LH₂ at about -252.9°C or below within the second portion 1104 of the inner volume. The first portion 1102 and the second portion 1104 of the storage tank 1100 can be distinct and/or at least partially overlapping regions in the storage tank 1100, which may correspond to respective zones in the storage tank 1100.

The system 1000 includes a first pump 1300 (e.g., a low pressure pump) disposed within the storage tank 1100, a second pump 1400 (e.g., high pressure pump) disposed outside of the storage tank 1100, and a heat exchanger 1500 disposed outside of the storage tank 1100. The system 1000 can include a mount 1320 to physically support or hold the first pump 1300. As shown, the mount 1320 is disposed in or along a bottom portion of the storage tank 1100 allowing the first pump 1300 to be submerged in the cryogenic liquid. The system 1000 may further include a heating device 1200 disposed within the headspace of the storage tank 1100. The system 1000 may further include one or more slosh baffles 1120 disposed within the storage tank 1100. The system 1000 further includes one or more manifolds 1110 that is disposed on or along a top portion of the storage tank 1100.

The system 1000 is to be implemented in a vehicle 1700 such as a mining haul truck. The vehicle 1700 includes a vehicle interface 1800 that is coupleable to the system 1000 and/or at least the storage tank 1100. The system 1000 is to receive a flow of cryogenic liquid, e.g., liquid hydrogen, from a refueling infrastructure 1005, and to deliver a flow of fuel, e.g., gaseous or liquid hydrogen to a power module 1600 to electrically power at least a portion of the vehicle 1700. The power module 1600 may include, for example, any number of hydrogen fuel cells that are to receive a flow of hydrogen at pressures greater than a storage pressure inside the hydrogen storage tank, as described in further detail herein.

In some embodiments, the system 1000 can be a modular and/or can include components that are modular, allowing components to be loaded, unloaded, serviced, replaced, etc. as needed or desired. In some implementations, the system 1000 and/or one or more components thereof can be configured for autonomous or at least semi-autonomous operation.

In some embodiments, the system 1000 can be to store and distribute/deliver a quantity of hydrogen fuel that meets a demand of large-scale industries such as, for example, the mining industry, the rail industry, the shipping/cargo industry, the aerospace industry, the large-scale fabrication industry, and/or the like.

The inner volume of the storage tank 1100 includes a first portion 1102 and a second portion 1104. In some embodiments, the first portion 1102 of the inner volume is an upper portion of the storage tank 1100 and the second portion 1104 of the inner volume is a lower portion of the storage tank 1100. That is, when the storage tank 1100 is installed on a vehicle operating on or above sea level, the second portion 1104 of the storage tank 1100 is closer to the earth or ground than the first portion 1102 of the storage tank 1100. In some embodiments, the storage tank 1100 is configured such that the second portion 1104 of the inner volume stores a cryogenic and/or subcooled liquid (e.g., liquid hydrogen), and the first portion 1102 of the inner volume forms the headspace or the like that stores a vapor of the cryogenic and/or subcooled liquid (e.g., gaseous hydrogen).

The storage tank 1100 is to house a cryogenic liquid with a vapor filling the storage tank 1100 vapor space or headspace above it. The headspace is to be present within the first portion 1102 of the inner volume of the storage tank 1100. The storage tank 1100 can be to maintain a temperature within the second portion 1104 of the inner volume that allows for cryogenic and/or subcooled liquid storage such as cryogenic and/or subcooled hydrogen.

The storage tank 1100 can be formed into any serviceable design, suitable shape, size, and/or configuration. In some embodiments, the storage tank 1100 can have a rectangular prism shape. In some embodiments, the storage tank 1100 can have a modular and adaptable structure to allow for various configurations based on, for example, desired power output, size constraints, operating conditions and/or operational requirements, etc. Similarly, the storage tank 1100 can have a size and/or shape that is at least based at least in part on one or more mounting locations on the vehicle 1700 and/or physical/configurational constraints of the vehicle 1700. The piping connections (e.g., the manifold 1110) into or out of the storage tank 1100 may be suitably modified as well.

In some embodiments, the storage tank 1100 can be vented to atmospheric pressure. In some embodiments, the storage tank 1100 can be able to be purged in accordance with International Standards Organization (ISO)/TR 15916.

In some embodiments, the storage tank 1100 can be maintained at or near atmospheric pressure. In some embodiments, the storage tank 1100 has an internal gauge pressure of no more than about 10 barg, no more than about 9.5 barg, no more than about 9.0 barg, no more than about 8.5 barg, no more than about 8.0 barg, no more than about 7.5 barg, no more than about 7.0 barg, no more than about 6.5 barg, no more than about 6.0 barg, no more than about 5.5 barg, no more than about 5.0 barg, no more than about 4.5 barg, no more than about 4.0 barg, no more than about 3.5 barg, no more than about 3.0 barg, no more than about 2.5 barg, no more than about 2.0 barg, no more than about 1.5 barg, or no more than about 1.0 barg. In some embodiments, the storage tank 1100 is to have an internal gauge pressure between about 0.0 barg and about 5.0 barg.

In some embodiments, the storage tank 1100 can have an internal volume of at least about 1.0 cubic meters (m3), at least about 1.5 m3, at least about 2.0 m3, at least about 2.5 m3, at least about 3.0 m3, at least about 3.5 m3, or at least about 4.0 m3, at least about 4.5 m3, at least about 5.0 m3, at least about 5.5 m3, at least about 6.0 m3, at least about 6.5 m3, at least about 7.0 m3, at least about 7.5 m3, at least about 8.0 m3, at least about 8.5 m3, at least about 9.0 m3, at least about 9.5 m3, or at least about 10.0 m3. In some embodiments, the storage tank 1100 can have an internal volume of no more than about 15.0 m3, no more than about 14.5 m3, no more than about 14.0 m3, no more than about 13.5 m3, no more than about 13.0 m3, no more than about 12.5 m3, no more than about 12.0 m3, no more than about 11.5 m3, no more than about 10.0 m3. In some embodiments, the internal volume of the storage tank 1100 is based at least in part on size and/or configurational constraints of the vehicle in which it is installed. For example, in some embodiments, the storage tank 1100 can be sized to fit into a standard engine bay of a mining vehicle that may otherwise house a diesel powerplant. Combinations of the above-referenced volumes of the storage tank 1100 and/or ranges thereof are also possible (e.g., at least about 1.0 m3 and no more than about 15 m3, or at least about 5 m3 and no more than about 10 m3), inclusive of all values and ranges therebetween.

In some embodiments, the first portion 1102 of the inner volume of the storage tank 1100 has a first volume and the second portion 1104 of the inner volume of the storage tank 1100 has a second volume. In some embodiments, a ratio of first volume to second volume is about 1:50, about 1:40, about 1:30, about 1:20, about 1:10, about 1:5, about 1:4, about 1:3, or about 1:2. In some embodiments, a ratio of first volume to second volume is at least about 1:50, at least about 1:40, at least about 1:30, at least about 1:20, at least about 1:10, at least about 1:5, at least about 1:4, at least about 1:3, or at least about 1:2. In some embodiments, a volume of the first portion 1102 of the inner volume is based at least in part on a temperature of the vapor disposed in the headspace of the inner volume and a minimum pressure within the inner volume to maintain a desired amount of NPSHa for the first pump 1300.

As the storage tank 1100 gains heat from the ambient environment, when a cryogenic liquid (e.g., liquid hydrogen) is stored within the storage tank 1100, the cryogenic liquid will gradually evaporate. For safety reasons, vapor of the cryogenic liquid is vented from the storage tank 1100 when the pressure in the inner volume exceeds a threshold operating pressure, which can result in a boil-off loss. In some embodiment, the storage tank 1100 can be to limit and/or substantially minimize boil-off such that boil-off losses over a 24-hour period are no more than about 5.0%, no more than about 4.5%, no more than about 4.0%, no more than about 3.5%, no more than about 3.0%, no more than about 2.5%, no more than about 2.0%, no more than about 1.5%, no more than about 1.0%, no more than about 0.5%, no more than about 0.4%, no more than about 0.3%, no more than about 0.2%, no more than about 0.1 %, or no more than about 0.05% of a volume of the cryogenic liquid stored within the storage tank 1100.

In order to minimize the boil-off, the storage tank 1100 is thermally insulated. In some embodiments, the storage tank 1100 can be thermally insulated by including at least one of materials of low thermal conductivity, evacuated double walls, and/or reflective metallic foils to reduce heat transfer by conduction, convection, and radiation.

In some embodiments, at least a portion of inner walls of the storage tank 1100 can be made from at least one of stainless steel (e.g., stainless steel 304 or 316), a carbon composite (e.g., carbon fiber composite), a thermoplastic composite, or a thermoset composite. In some embodiments, at least a portion of outer walls of the storage tank 1100 can be made from at least one of carbon steel, such as ASTM- A-572, grade 50, stainless steel, a carbon composite, a thermoplastic composite, or a thermoset composite. In some embodiments, at least a portion of an outer surface of the storage tank 1100 can painted or coated with a reflective material.

In some embodiments, the storage tank 1100 can be designed, fabricated, and/or tested in accordance with at least one of ISO 13985 (dated 2006), ISO 21029-1 (dated 2018), ISO 21013-3 (dated 2016), and European Environment Agency's Regulation (EC) 79 (dated 2009). That is, in some embodiments, the storage tank can have specifications that meet requirements of at least one of ISO 13985 (dated 2006), ISO 21029-1 (dated 2018), ISO 21013-3 (dated 2016), and European Environment Agency's Regulation (EC) 79 (dated 2009).

In some embodiments, the storage tank 1100 can have port disposed on, for example, a top portion of the storage tank 1100 that is in fluid communication with the first portion 1102 of the inner volume. The port can be to receive hydrogen gas and/or vapor into the first portion 1102 of the inner volume. In some embodiments, the port is to receive hydrogen gas and/or vapor from a vapor delivery line that is in fluid communication with one or more components of system 1000 such as, for example, an outlet of the heat exchanger 1500.

In some embodiments, the system 1000 includes the heating device 1200 (also referred to herein as a "thermal device") that is disposed within the first portion 1102 of the inner volume. The heating device 1200 can be any suitable heater to primarily heat vapor, present within the headspace of the storage tank 1100, above the cryogenic liquid. In some embodiments, the heating device 1200 is an induction heater that, in some implementations, can output thermal energy (heat) using an induction current generated by a magnetic field as a heat source. When the storage tank 1100 is filled with LH₂, the heating device 1200 can primarily heat the hydrogen gas located in the first portion 1102 of the storage tank 1100 (e.g., the headspace) above the LH₂ located in the second portion 1104 of the storage tank 1100.

In some embodiments, the heating device 1200 can be affixed to at least one inner wall of the storage tank 1100 using at least one of bolt-on brackets, clamps, fasteners, welding, adhesive bonding, or specialized mounting systems like racks, platforms, scaffolding, and/or the like. In some embodiments, the heating device 1200 can be affixed to at least one inner wall of the storage tank 1100 using any suitable connector(s), adaptor(s), coupler(s), etc. (referred to for simplicity as "connector(s)). In some embodiments, the connector(s) can be used to physically, and/or electrically couple the heating device 1200 to at least one inner wall of the storage tank 1100 in a manner that allows the heating device 1200 to be removed relatively easily if the heating device 1200 needs to undergo maintenance or be changed with a new heating device. In some embodiments, the connector(s) can include at least one of push-pull connector(s), bolt-on mounting bracket(s), quick-release clamp(s), hook-and-loop strap(s), magnetic mount(s), snap-fit connector(s), rail or track system(s) with sliding attachment(s), spring-loaded latch(es), and/or any other suitable connector or coupler.

In some embodiments, the heating device 1200 can have two opposing ends, each attached to opposing inner walls of the storage tank 1100. For example, one end of the heating device 1200 can be connected to a first inner wall, while the other end can be fastened to a second inner wall, which is opposite or substantially opposite the first inner wall. This configuration ensures that the heating device 1200 spans the width of the storage tank 1100 to homogenously distribute heat within the first portion 1102 of the storage tank 1100 across the width of the storage tank 1100.

The heating device 1200 can have any suitable shape that aids in a substantially equal distribution of heat within the first portion 1102 of the storage tank 1100. The heating device 1200 is to output thermal energy (heat), which in turn, heats and expands the vapor disposed in the first portion 1102 of the inner volume of the storage tank 1100. Without a flow of fluid into or out of the storage tank 1100, the expansion of the vapor contained in the first portion 1102 of the inner volume increases a total internal pressure of the storage tank 1100. Accordingly, the heating device 1200 can be used to output thermal energy (heat) to expand the vapor in the first portion 1102 of the inner volume to, for example, maintain the total internal pressure of the storage tank 1100 above predetermined threshold pressure. In some embodiments, as the first pump 1300 pumps liquid gas out the storage tank 1100, the heating device 1200 can output thermal energy (heat) to expand the hydrogen gas disposed in the first portion 1102 of the inner volume of the storage tank 1100 to maintain the total internal pressure of the storage tank 1100 above the predetermined threshold pressure. In some embodiments, the predetermined threshold is about 10.0 bar, about 9.5 bar, about 9.0 bar, about 8.5 bar, about 8.0 bar, about 7.5 bar, about 7.0 bar, about 6.5 bar, about 6.0 bar, about 5.5 bar, about 5.0 bar, about 4.5 bar, about 4.0 bar, about 3.5 bar, about 3.0 bar, about 2.5 bar, about 2.0 bar, about 1.8 bar, about 1.5 bar, about 1.2 bar, or about 1.0 bar (or any pressure or value therebetween).

The primary purpose of the heating device 1200 in the storage tank 1100 is to maintain the pressure, especially when liquid hydrogen is being withdrawn. The operating principle is based on the concept of superheating the vapor space in the storage tank 1100. In general, "superheating" refers to increasing the temperature of fluid above its saturation point for a given pressure. The vapor saturation point is the temperature at which a liquid completely evaporates into vapor. As the vapor is heated, its density decreases, causing it to expand. This expansion results in an increase in pressure within the storage tank 1100. This process of superheating the vapor does not substantially increase the temperature of the liquid hydrogen at the bottom of the storage tank 1100 (e.g., in the second portion 1104 of the inner volume). This leaves the liquid hydrogen in a subcooled state and the increased pressure (e.g., in the first portion 1102 of the inner volume) increases the NPSHa of the liquid hydrogen, which is desirable for pumps operating in cryogenic storage systems. NPSHa represents the absolute pressure available at a pump suction port, taking into account the pressure at the liquid surface, the height difference between the liquid surface and the pump, and any friction losses in the suction line. NPSHa is used to ensure that a pump operates without cavitation, which can cause damage and reduce efficiency. Thus, the heating device 1200 plays a dual role: maintaining pressure in the storage tank 1100 and increasing the NPSHa of the cryogenic liquid, enhancing the efficiency and safety of the system 1000.

In some embodiments, the heating device 1200 is to heat the vapor above the cryogenic liquid to a temperature no more than about 60 °C, no more than about 55 °C, no more than about 50 °C, no more than about 45°C, no more than about 40 °C, no more than about 35 °C, no more than about 30 °C, no more than about 25 °C, no more than about 20 °C, no more than about 15 °C, no more than about 10 °C, or no more than about 5°C. In some embodiments, the heating device 1200 can limit the increase in temperature of the cryogenic liquid disposed within a bottom layer of the second portion 1104 of the inner volume of the storage tank 1100 to no more than about 10 °C, no more than about 9 °C, no more than about 8 °C, no more than about 7 °C, no more than about 6 °C, no more than about 5 °C, no more than about 4.5 °C, no more than about 4 °C, no more than about 3.5 °C, no more than about 3 °C, no more than about 2.5 °C, no more than about 2 °C, no more than about 1.5 °C, no more than about 1 °C, no more than about 0.5 °C, or no more than about 0.1 °C, inclusive of all values and ranges therebetween.

In some embodiments, the heating device 1200 can be powered by the power module 1600 installed on the vehicle 1700. The heating device 1200 may be connected to an external power source. The heating device 1200 may be in electrical communication with an external power source, e.g., the power module 1600 installed on the vehicle 1700, through the manifold 1110. In some embodiments, the heating device 1200 may have one or more electrical cables passing through the manifold 1110 and connected to an external power source. In some embodiments, the heating device 1200 can be in electrical communication with a control unit that is to activate or deactivate the heating device 1200 based on internal pressure of the storage tank 1100. In certain implementations, the heating device 1200 is to activate autonomously or semi-autonomously when the internal pressure of the storage tank 1100 approaches or drops below the predetermined threshold pressure. In certain implementations, the heating device 1200 is to deactivate autonomously or semi-autonomously when the internal pressure of the storage tank 1100 exceeds a second predetermined threshold pressure (e.g., a maximum internal pressure), thereby limiting and/or preventing boil-off.

The first pump 1300 is in fluid communication with the second pump 1400 such that the first pump 1300 pumps the low pressure flow (e.g., a first flow of relatively low pressure) of the liquid hydrogen to the second pump 1400. In some embodiments, the cryogenic liquid can be pumped from the first pump 1300 and moved through the conduit manifold 1110 to reach the second pump 1400.

In some embodiments, the first pump 1300 is to receive a cryogenic liquid contained in the second portion 1104 of the inner volume and to pump the cryogenic liquid out of the storage tank 1100 to produce a low pressure flow of the cryogenic liquid. In some embodiments, the first pump 1300 is to receive liquid hydrogen when liquid hydrogen is stored in the storage tank 1100 and to pump the liquid hydrogen out of the hydrogen storage tank to produce a low pressure flow of liquid hydrogen.

In some embodiments, the first pump 1300 can include at least one of a centrifugal pump or a gear pump. In some embodiments, the first pump 1300 is a centrifugal pump. In some embodiments, the centrifugal pump can include at least one of a single-stage centrifugal pump, a multi-stage centrifugal pump, a radial flow pump, an axial flow pump, a mixed flow pump, or a magnetic drive centrifugal pump. In some embodiments, the first pump 1300 is a partial emission (i.e., Barske) pump.

In general, the first pump 1300 is to be more compact (e.g., having a smaller size) compared to the second pump 1400, and is to operate at lower and/or slower parameters than the second pump 1400 such that the heat output by the motor of the first pump 1300 is relatively low and does not significantly alter the temperature of the cryogenic liquid when stored within the storage tank 1100.

In some embodiments, the first pump 1300 is to be partially or fully submerged within the cryogenic liquid (for example, liquid hydrogen). In some embodiments, the motor of the first pump 1300 is to be fully submerged within the cryogenic liquid. In some embodiments, the first pump 1300 has a motor and a pumping mechanism. In some embodiments, at least one of the motor and/or pumping mechanism of the first pump 1300 is to be fully submerged within the cryogenic liquid.

In some embodiments, the low pressure flow of the cryogenic liquid has a pressure of at least about 1 bar, at least about 2 bar, at least about 3 bar, at least about 4 bar, at least about 5 bar, at least about 6 bar, at least about 7 bar, at least about 8 bar, at least about 9 bar, or at least about 10 bar. In some embodiments, the low pressure flow of the cryogenic liquid has a pressure of no more than about 20 bar, no more than about 15 bar, no more than about 10 bar, no more than about 9 bar, no more than about 8 bar, no more than about 7 bar, no more than about 6 bar, no more than about 5 bar, no more than about 4 bar, no more than about 3 bar, no more than about 2 bar, no more than about 1.5 bar. Combinations of the above-referenced pressures and/or ranges thereof are also possible (e.g., at least about 1 bar and no more than about 20 bar or at least about 2 bar and no more than about 10 bar), inclusive of all values and ranges therebetween.

In some embodiments, the low pressure flow of the cryogenic liquid flows at a rate of at least about 10 g/s, at least about 15 g/s, at least about 20 g/s, at least about 25 g/s, at least about 30 g/s, at least about 35 g/s, or at least about 40 g/s. In some embodiments, the low pressure flow of the cryogenic liquid flows at a rate of no more than about 70 g/s, no more than about 65 g/s, no more than about 60 g/s, no more than about 55 g/s, no more than about 50 g/s, no more than about 45 g/s, no more than about 40 g/s, no more than about 35 g/s, no more than about 30 g/s, no more than about 25 g/s, no more than about 20 g/s, or no more than about 15 g/s. Combinations of the above-referenced mass flow rates and/or ranges thereof are also possible (e.g., at least about 10 g/s and no more than about 70 g/s or at least about 20 g/s and no more than about 60 g/s), inclusive of all values and ranges therebetween.

In some embodiments, the first pump 1300 can have a rotational speed of at least about 50 rpm, at least about 100 rpm, at least about 200 rpm, at least about 300 rpm, at least about 400 rpm, at least about 500 rpm, at least about 600 rpm, at least about 700 rpm, at least about 800 rpm, at least about 900 rpm, or at least about 1,000 rpm. In some embodiments, the first pump 1300 can have a rotational speed of no more than about 2,000 rpm, no more than about 1,000 rpm, no more than about 900 rpm, no more than about 800 rpm, no more than about 700 rpm, no more than about 600 rpm, no more than about 500 rpm, no more than about 400 rpm, no more than about 300 rpm, no more than about 200 rpm, or no more than about 100 rpm. Combinations of the above-referenced rotational speeds and/or ranges thereof are also possible (e.g., at least about 50 rpm and no more than about 2,000 rpm or at least about 500 rpm and no more than about 1,500 rpm), inclusive of all values and ranges therebetween. In some embodiments, the first pump 1300 can have a rotational speed of about 50 rpm, about 100 rpm, about 200 rpm, about 300 rpm, about 400 rpm, about 500 rpm, about 600 rpm, about 700 rpm, about 800 rpm, about 900 rpm, about 1,000 rpm, about 1,500, or about 2,000 rpm.

In some embodiments, the first pump 1300 can have a capacity of at least about 10 liters per minute (lpm), at least about 15 lpm, at least about 20 lpm, at least about 25 lpm, at least about 30 lpm, at least about 35 lpm, at least about 40 lpm, at least about 45 lpm, at least about 50 lpm, at least about 55 lpm, at least about 60 lpm, at least about 65 lpm, at least about 70 lpm, at least about 75 lpm, at least about 80 lpm, at least about 85 lpm, or at least about 90 lpm. In some embodiments, the first pump 1300 can have a capacity of no more than about 100 lpm, no more than about 95 lpm, no more than about 90 lpm, no more than about 85 lpm, no more than about 80 lpm, no more than about 75 lpm, no more than about 70 lpm, no more than about 65 lpm, no more than about 60 lpm, no more than about 55 lpm, no more than about 50 lpm, no more than about 45 lpm, no more than about 40 lpm, no more than about 35 lpm, no more than about 30 lpm, no more than about 25 lpm, no more than about 20 lpm, no more than about 15 lpm, or no more than about 10 lpm. Combinations and/or ranges of the above-referenced capacities are also possible (e.g., at least about 10 lpm and no more than about 100 lpm or at least about 20 lpm and no more than about 80 lpm), inclusive of all values and ranges therebetween.

In some embodiments, the first pump 1300 is semi-permanently mounted onto a bottom inner wall of the storage tank 1100. In some embodiment, the first pump 1300 is removably coupled on the bottom inner wall of the storage tank 1100 such that if it performs under a predetermined threshold, breaks, fails, and/or needs maintenance, it can be replaced with another pump performing better than the one that is removed from the bottom of the storage tank 1100. In some embodiments, the first pump 1300 may be elevated with respect to the bottom inner wall of the storage tank 1100 with the help of the mount 1320.

The mount 1320 can be in any type of shape that ensures stability of the first pump with respect to the bottom inner wall of the storage tank. For example, in a case that the storage tank 1100 is installed on an operating vehicle, the mount 1320 ensures that the first pump 1300 is not moved when the vehicle is operating in a field, e.g., a mining site. In some embodiments, the mount 1320 can include mounting systems like racks, platforms, scaffolding, and/or the like. In some embodiments, the mount 1320 can be a flange that is coupled to the bottom inner wall of the storage tank 1100. In some embodiments, the first pump 1300 can be affixed to the mount 1320 by using any suitable connector(s), adaptor(s), coupler(s), etc. (referred to for simplicity as "connector(s)") that is suitable for use with or in a cryogenic liquid that has temperatures -150°C or below. In some embodiments, the connector(s) can include at least one of push-pull connector(s), bolt-on mounting bracket(s), quick-release clamp(s), hook-and-loop strap(s), magnetic mount(s), snap-fit connector(s), rail or track system(s) with sliding attachment(s), spring-loaded latch(es), and/or any other suitable connector or coupler.

The second pump 1400 is in fluid communication with the first pump 1300 and to receive the low pressure flow of cryogenic liquid from the first pump 1300 and to produce a high pressure flow of cryogenic liquid (e.g., liquid hydrogen; a second flow of a pressure greater than the low pressure of the first flow).

The second pump 1400 can be any suitable pump. For example, the second pump 1400 can be a positive displacement pump. In some embodiments, the positive displacement pump is at least one of a gear pump, a vane pump, a screw pump, a lobe pump, a scroll pump, a single piston pump, a triplex piston pump, a radial piston pump, an axial piston pipe, a bent axis pump, or a linear drive piston pump.

If space requirements allow, the second pump 1400 is positioned as near as feasible to the discharge line of the first pump 1300, where it leaves the storage tank 1100. However, there needs to be enough space between the second pump 1400 and the storage tank 1100 such that the heat load of the second pump 1400 and its motor can be kept isolated from the cryogenic liquid when present in the storage tank 1100. The second pump 1400 is to boost pressure of the low pressure flow of cryogenic liquid to levels ranging from dozens to hundreds of bar that are suitable for use in the power module 1600 of the vehicle 1700.

In some embodiments, the high pressure flow of the cryogenic liquid has a pressure of at least about 20 bar, at least about 30 bar, at least about 40 bar, at least about 50 bar, at least about 60 bar, at least about 70 bar, at least about 80 bar, at least about 100 bar, at least about 150 bar, at least about 200 bar, at least about 250 bar, or at least about 300 bar. In some embodiments, the high pressure flow of the cryogenic liquid has a pressure of no more than about 500 bar, no more than about 450 bar, no more than about 400 bar, no more than about 350 bar, no more than about 300 bar, no more than about 250 bar, no more than about 200 bar, no more than about 150 bar, or no more than about 100 bar. Combinations of the above-referenced pressures and/or ranges thereof are also possible (e.g., at least about 20 bar and no more than about 500 bar or at least about 20 bar and no more than about 450 bar), inclusive of all values and ranges therebetween.

In some embodiments, the high pressure flow of the cryogenic liquid flows at a rate of at least about 20 g/s, at least about 25 g/s, at least about 30 g/s, at least about 35 g/s, at least about 40 g/s, at least about 45 g/s, at least about 50 g/s, at least about 55 g/s, or at least about 60 g/s. In some embodiments, the high pressure flow of the cryogenic liquid flows at a rate of no more than about 300 g/s, no more than about 250 g/s, no more than about 200 g/s, no more than about 150 g/s, no more than about 100 g/s, no more than about 80 g/s, no more than about 60 g/s, or no more than about 50 g/s. Combinations of the above-referenced mass flow rates and/or ranges thereof are also possible (e.g., at least about 20 g/s and no more than about 300 g/s or at least about 40 g/s and no more than about 80 g/s), inclusive of all values and ranges therebetween.

In some embodiments, the second pump 1400 can have a rotational speed of at least about 50 rpm, at least about 100 rpm, at least about 200 rpm, at least about 300 rpm, at least about 400 rpm, at least about 500 rpm, at least about 600 rpm, at least about 700 rpm, at least about 800 rpm, at least about 900 rpm, or at least about 1,000 rpm, or at least about 2,000 rpm, at least about 3,000 rpm, at least about 4,000 rpm, at least about 5,000 rpm, at least about 6,000 rpm, at least about 7,000 rpm, at least about 8,000 rpm, or at least about 9,000 rpm. In some embodiments, the second pump 1400 can have a rotational speed of no more than about 10,000 rpm, no more than about 9,000 rpm, no more than about 8,000 rpm, no more than about 7,000 rpm, no more than about 6,000 rpm, no more than about 5,000 rpm, no more than about 4,000 rpm, no more than about 3,000 rpm, no more than about 2,000 rpm, no more than about 1,000 rpm, no more than about 900 rpm, no more than about 800 rpm, no more than about 700 rpm, no more than about 600 rpm, no more than about 500 rpm, no more than about 400 rpm, no more than about 300 rpm, no more than about 200 rpm, or no more than about 100 rpm. Combinations of the above-referenced rotational speeds and/or ranges thereof are also possible (e.g., at least about 50 rpm and no more than about 10,000 rpm or at least about 500 rpm and no more than about 5,000 rpm), inclusive of all values and ranges therebetween. In some embodiments, the first pump 1300 can have a rotational speed of about 50 rpm, about 100 rpm, about 200 rpm, about 300 rpm, about 400 rpm, about 500 rpm, about 600 rpm, about 700 rpm, about 800 rpm, about 900 rpm, about 1,000 rpm, about 2,000 rpm, about 3,000 rpm, about 4,000 rpm, about 5,000 rpm, about 6,000 rpm, about 7,000 rpm, about 8,000 rpm, about 9,000 rpm, or about 10,000 rpm.

In some embodiments, the second pump 1400 can have a capacity of at least about 10 lpm, at least about 15 lpm, at least about 20 lpm, at least about 25 lpm, at least about 30 lpm, at least about 35 lpm, at least about 40 lpm, at least about 45 lpm, at least about 50 lpm, at least about 55 lpm, at least about 60 lpm, at least about 65 lpm, at least about 70 lpm, at least about 75 lpm, at least about 80 lpm, at least about 85 lpm, at least about 90 lpm, at least about 95 lpm, or at least about 100 lpm. In some embodiments, the second pump 1400 can have a capacity of no more than about 100 lpm, no more than about 95 lpm, no more than about 90 lpm, no more than about 85 lpm, no more than about 80 lpm, no more than about 75 lpm, no more than about 70 lpm, no more than about 65 lpm, no more than about 60 lpm, no more than about 55 lpm, no more than about 50 lpm, no more than about 45 lpm, no more than about 40 lpm, no more than about 35 lpm, no more than about 30 lpm, no more than about 25 lpm, no more than about 20 lpm, no more than about 15 lpm, no more than about 10 lpm, or no more than about 5 lpm. Combinations and/or ranges of the above-referenced capacities are also possible (e.g., at least about 10 lpm and no more than about 100 lpm or at least about 20 lpm and no more than about 80 lpm), inclusive of all values and ranges therebetween.

In some embodiments, the first pump 1300 is operating at a first speed and the second pump 1400 is operating at a second speed, the second speed being greater than the first speed. In some embodiments, the second speed is at least about 1.1, at least about 1.2, at least about 1.3, at least about 1.4, at least about 1.5, at least about 2, at least about 2.5, at least about 3, at least about 3.5, at least about 4, at least about 4.5, at least about 5, at least about 6, at least about 7, at least about 8, at least about 9, at least about 10, at least about 15, or at least about 20 times greater than the first speed.

In some embodiments, the first speed can be substantially the same as the second speed. In such embodiments, low power and/or low pressure auxiliary systems (e.g., low pressure fuel cells and/or any other low pressure power system) may run mainly off the first pump 1300. In some such embodiments, the first pump 1300 may be to operate with a flow rate up to about 10% higher than a flow rate of the second pump 1400 to ensure the second pump 1400 is never starved of the cryogenic liquid.

The one or more heat exchangers 1500 are to receive the high pressure flow of cryogenic liquid from the second pump 1400. The heat exchanger 1500 is disposed downstream of the second pump 1400 such that at least one inlet of the heat exchanger 1500 can receive the high pressure flow of liquid cryogen from the second pump 1400.

The heat exchanger 1500 (e.g., an evaporator, a radiator, liquid-to-liquid heat exchanger, and/or any other suitable heat exchanger) has a working fluid can circulate in a fluid loop that also passes through fuel cell systems, or associated components. Cryogenic liquid (e.g., liquid hydrogen) may be heated to a suitable temperature and pressure for receipt by a power module (e.g., hydrogen fuel cells) by a series of vaporizers/heat exchangers 1500. In some embodiments, the system 1000 can be used to heat liquid hydrogen (since the working fluid will be at temperatures substantially higher than that of the liquid hydrogen). In some embodiments, the heat exchanger 1500 has an inlet that receives a working fluid (e.g., liquid) from a container storing the working fluid. In some embodiments, the working fluid can include a liquid such as water and/or mixtures of water and other materials (such as ethylene glycol) that have a lower freezing temperature than water. The working fluid can contain little or no ionic species, so that the electrical conductivity of the working fluid is very low allowing it to be used as the working fluid to cool the fuel cells. In some embodiments, the working fluid used in the systems described herein may include water, particularly deionized water.

In some embodiments, the heat exchanger 1500 can be to provide a flow of gas (e.g., vapor of the cryogenic liquid) to a power module. In some embodiments, the flow of gas can have a temperature of at least about -5 °C, at least about 0 °C, at least about 5 °C, at least about 10 °C, at least about 15 °C, at least about 20 °C, at least about 25 °C, at least about 30 °C, at least about 35 °C, or at least about 40°C. In some embodiments, the flow of gas can have a temperature of no more than about 50 °C, no more than about 45 °C, no more than about 40°C, no more than about 35 °C, no more than about 30°C, no more than about 25 °C, no more than about 20 °C, no more than about 15 °C, no more than about 10 °C, no more than about 5 °C, no more than about 0 °C, or no more than about -5 °C. Combinations and/or ranges of the above-referenced temperatures are also possible (e.g., at least about -5 °C and no more than about 50 °C or at least about 0 °C and no more than about 40 °C), inclusive of all values and ranges therebetween.

In some embodiments, the heat exchanger 1500 has a first outlet to provide a first flow of hydrogen gas to a power module (e.g., at least one hydrogen fuel cell). In some embodiments, the heat exchanger 1500 can further have a second outlet to provide a second flow of hydrogen gas to the storage tank 1100. In some embodiments, the first flow of hydrogen gas conveyed to the power module is a high pressure flow of hydrogen gas while the second flow of hydrogen gas is a low pressure flow of hydrogen gas conveyed back to the storage tank 1100.

The one or more slosh baffles 1120 disposed within the storage tank 1100 are to minimize the movement or "sloshing" of the cryogenic liquid. The one or more slosh baffles 1120 disposed within the storage tank 1100 can enhance at least one of stability, performance, and safety of the storage tank 1100. By dampening the movement of the liquid, slosh baffles 1120 help maintain the stability of the storage tank 1100, preventing shifts in the center of gravity that could lead to instability or accidents.

The manifold 1110 or the like is in fluid communication with an inner volume of the storage tank 1100. The manifold 1110 can include one or more flow paths to allow fluid communication between inner volume of the storage tank 1100 and any component (e.g., the second pump 1400, the refueling infrastructure 1005, external environment) disposed outside of the storage tank 1100. The manifold 1110 can be any suitable shape, size, and/or configuration. For example, the manifold 1110 can be and/or can include any suitable structure to define one or more flow paths for hydrogen and/or any other suitable fluids to flow between inner volume of the storage tank 1100 and any component of the system 1000 disposed outside of the storage tank 1100. In some embodiments, the manifold 1110 can include a single manifold (e.g., a single manifold with multiple flow paths or a single manifold with a single flow path) or a set of manifolds (each manifold from the set has single flow path or multiple flow paths).

In some embodiments, for example, the manifold 1110 can include at least an inlet or inlet interface that can be in fluid communication with the refueling infrastructure 1005 (or at least one storage tank storing a cryogenic liquid stored therein), an outlet or outlet interface that can be in fluid communication with one or more components of the system 1000, and one or more fluid flow paths between the inlet and outlet.

In some embodiments, the manifold 1110 can include at least an outlet or outlet interface that can be in fluid communication with the second pump 1400. In some embodiments, the manifold 1110 can include at least an outlet or outlet interface that can be in fluid communication with an external environment. In some embodiments, the manifold 1110 can have at least an outlet or outlet interface that vents or conveys media (e.g., gas such as hydrogen gas) to the external environment (e.g., as boil-off). The external environment may include an outdoor environment such as spaces open to atmosphere.

The manifold 1110 can include any suitable device, structure, and/or feature to provide and control fluid flow between the inner volume of the storage tank 1100 and the outside of the storage tank 1100 such as hosing, tubes, conduits, pipes, valves, etc.

In some implementations, the system 1000 may include a controller (e.g., a digital controller such as a programmable logic unit and/or any other suitable controller) to control one or more operations of the manifold 1110. In some implementations, the system 1000 and/or the manifold 1110 thereof may include one or more safety valves, pressure sensors, and any other safety devices that are to be selectively activated or deactivated, for example, in response to detecting a pressure above a threshold pressure, or an activation signal received from the controller so as to inhibit damage or prevent failure. In some implementations, the controller can be human-operated (e.g., a human operator provides an input into the controller) or can be at least semi-autonomous (e.g., to perform any suitable process(es) based on an input from any suitable source such as sensors, interfaces, valves, etc., substantially with or without human operation). In some embodiments, the manifold 1110 may include additional piping into and/or out of the storage tank 1100, including for the return flow of gas and/or liquid into the first portion 1102 (e.g., a top portion) or the second portion 1104 (e.g., a bottom portion) of the inner volume of the storage tank 1100.

In some embodiments, the system 1000 may include and/or may be in communication with the power module 1600 of the vehicle. The power module 1600 can include one or more hydrogen fuel cell module(s) or stack(s). In some embodiments, each of the hydrogen fuel cell module(s) and/or stack(s) can include any number of individual fuel cells (e.g., one hydrogen fuel cell, two hydrogen fuel cells, three hydrogen fuel cells, four hydrogen fuel cells, five hydrogen fuel cells, six hydrogen fuel cells, seven hydrogen fuel cells, eight hydrogen fuel cells, nine hydrogen fuel cells, ten hydrogen fuel cells, or more). In some embodiments, the power module 1600 is to be in electrical communication with the vehicle 1700 to provide electric power to one or more portions of the vehicle 1700. For example, the power module 1600 can be to provide a net power of at least about 0.5 megawatt, at least about 0.6 megawatt, at least about 0.7 megawatt, at least about 0.8 megawatt, at least about 0.9 megawatt, at least about 1.0 megawatt, at least about 1.1 megawatt, at least about 1.2 megawatt, or more. In some embodiments, the power module 1600 is to receive a flow of gas or a flow of cryogenic liquid from the heat exchanger 1500.

In some embodiments, the system 1000 may include additional control elements, as necessary, such as control valves, or temperature, pressure sensing devices to control the inner environment of the storage tank 1100 for safety and performance reasons.

In some embodiments, the vehicle 1700, in which the system 1000 is implemented, is a heavy equipment vehicle having a size exceeding highway size constraints. The storage tank 1100 can be removably coupleable to the vehicle 1700. In some embodiments, the vehicle 1700 can be any other suitable heavy equipment vehicle (e.g., any suitable known or modified mining haul truck and/or the like). In some embodiments, the vehicle 1700 may have a hauling capacity of greater than about 135 metric tons (tonnes) (e.g., 150 tonnes, 200 tonnes, 250 tonnes, 300 tonnes, tonnes, 400 tonnes, 450 tonnes, inclusive, or more).

In some embodiments, the system 1000 may include a vehicle interface 1800 coupled to the vehicle 1700 and the storage tank 1100. In some embodiments, vehicle interface 1800 is a platform coupled to the vehicle 1700 and removably coupleable to the storage tank 1100.

The vehicle interface 1800 can aid the storage tank 1100 to physically and/or fluidically and/or electrically coupled to the vehicle 1700. As such, the vehicle interface 1800 can include any suitable component and/or can have any suitable configuration that allows the storage tank 1100 to interface and/or couple to the vehicle 1700. In some implementations, the vehicle interface 1800 can be a physical interface as well as any other suitable interface such as a fluidic interface, an electrical and/or electronic interface. For example, such a vehicle interface 1800 can provide an electric interface allowing electric power to be transferred between the vehicle 1700 and the storage tank 1100. In other implementations, the vehicle interface 1800 can be a platform, bed, and/or structure that is mounted to the chassis or other portion of the vehicle 1700 (e.g., the storage tank 1100 is integrated with the vehicle 1700).

The vehicle interface 1800 may have one or more interfaces, connectors, couplers, adapters, ports, manifolds, etc., allowing the vehicle interface 1800 to interface and/or connect to one or more components implemented in or on the vehicle 1700 (e.g., the power module 1600, the heat exchanger 1500, the storage tank 1100, and/or the like). In some embodiments, the vehicle interface 1800 can include a manifold including any suitable connector, coupler, adapter, interface, conduit, tubing, piping, etc. to receive a flow of hydrogen from the heat exchanger 1500. Accordingly, in some embodiments, the manifold may be fluidically coupled to the heat exchanger 1500. The manifold can also be fluidically coupled to the power module 1600. As such, a media (e.g., one or more fluids such as hydrogen gas, air, coolant, water, etc.) can be conveyed between the heat exchanger 1500 and the vehicle interface 1800.

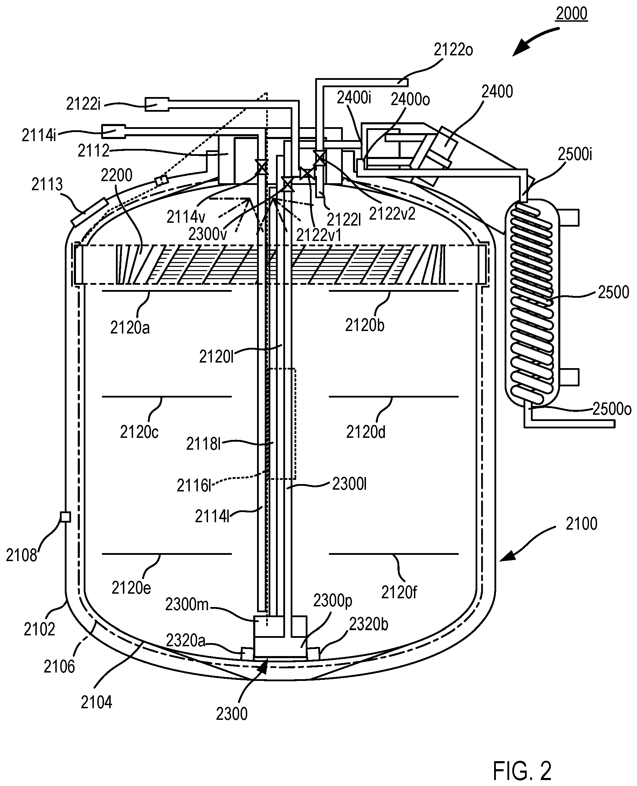

FIG. 2 is schematic illustrations of a system 2000, according to an embodiment. The system 2000 includes a storage tank 2100 to store a liquid hydrogen. The system 2000 includes a first pump 2300 (e.g., a low pressure pump) disposed within the storage tank 2100, a second pump 2400 (e.g., a high pressure pump) disposed outside of the storage tank 2100, and a heat exchanger 2500 disposed outside of the storage tank 2100. The system 2000 further includes a heating device 2200 disposed within a headspace of the storage tank 2100. The system 2000 may further include a mount (2320a, 2320b) to physically support or hold the first pump 2300. The system 2000 may further include one or more slosh baffles 2120a-f disposed within the storage tank 2100. The system 2000 further includes one or more manifolds 2110 that is disposed on top of the storage tank 2100.

The storage tank 2100 includes one or more walls that can include a first inner layer 2104 and a second inner layer 2106, and an outer layer 2102 that is disposed on the second inner layer 2106. The first inner layer 2104 is to withstand the extremely low temperatures (e.g., below - 150°C, and more particularly, about -220°C to about -253°C) and is usually made from materials with high resistance to embrittlement at cryogenic temperatures. In some embodiments, the first inner layer 2104 can include at least one of stainless steel, aluminum alloys, or composite materials. In some embodiments, the composite materials can include at least one of a carbon fiber composite, a thermoplastic composite, or a thermoset composite.

The second inner layer 2106 is to minimize heat transfer from the storage tank 2100 to an external environment. In some embodiments, the second inner layer 2106 can be a vacuum layer. In some embodiments, the second inner layer 2106 can include at least one of a reflective material (e.g., aluminized Mylar), a foam material (e.g., polyurethane), or a composite material. The outer layer 2102 can provide additional structural support and houses the storage tank 2100. It can also serve as a secondary containment barrier in case of any leaks or failures in the inner tank.

The system 2000 can include a pressure relief mechanism 2113 (e.g., a pressure relief disc or valve such as a blow-off valve), that is in fluid communication with the inner volume of the storage tank 2100, to ensure safety by managing the pressure within the storage tank 2100. When the pressure inside the storage tank 2100 reaches a predetermined threshold, the pressure relief mechanism 2113 can be manually or automatically activated to release excess pressure and prevent over-pressurization. The operation of the pressure relief mechanism 2113 can vary depending on their design and the specific requirements of the storage tank 2100. The system 2000 can further include a vacuum port 2108 to evacuate air and other gases from the space between the inner layer 2104, 2106 and the outer layer 2102. A vacuum pump (not shown) can be connected to the vacuum port 2108 port to remove the gases, creating a vacuum. Once the desired vacuum level is achieved, the vacuum port 2108 port can be sealed to maintain the vacuum over a certain period of time.

The first pump 2300 includes a pump motor 2300m and a pumping mechanism 2300p. The first pump 2300 is fluidically connected to an inlet 2400i of the second pump 2400 through a low pressure liquid hydrogen flow line 23001. A valve 2300v (e.g., a globe valve, a gate valve, a ball valve, a butterfly valve, a solenoid valve etc.) is coupled to the low pressure liquid hydrogen flow line 2300l, as shown in FIG. 2. The pump motor 2300m is in an electrical communication with a control unit (e.g., a control unit of a vehicle) through one or more power lines 2116l (e.g., cables or the like). The power line 2116l is responsible to control the speed and performance of the pump motor 2300m and send a signal to the control unit if the pump motor 2300m operates under a certain performance value.

An outlet 2400o of the second pump 2400 is coupled to an inlet 2500i of the heat exchanger 2500 such that the heat exchanger 2500 can receive a high pressure flow of liquid hydrogen produced by the second pump 2400. The heat exchanger has an outlet 2500o that is in fluid communication with one or more hydrogen fuel cells (not shown).

The storage tank 2100 has an inlet 2114i that is to receive liquid hydrogen from a refueling station. The inlet 2114i is in a fluid communication with the inner volume of the storage tank 2100 through a flow line 2114l (e.g., a defuel straw). A valve 2114v is disposed is coupled to the flow line 2114l to control the amount of liquid hydrogen received from the refueling station.

The storage tank 2100 has an outlet 2122o to be in a fluid communication with the inner volume of the storage tank 2100 through a flow line 2122l, and to vent a hydrogen gas to an external environment when internal pressure of the storage tank 2100 exceeds below a predetermined value. A valve 2122v2 is coupled to the flow line 2122l prior to the outlet 2122o such that the amount of gas vented to the external environment can be controlled. In some embodiments, the valve 2122v2 can be automatically or semi-automatically opened to vent the hydrogen gas from the inner volume of the storage tank 2100 to the external environment. That is, when the pressure inside the storage tank 2100 increases beyond the working pressure due to heat influx and subsequent evaporation of the liquid hydrogen, the valve 2122v2 opens, allowing the normal boil-off flow from the vapor space in the tank through the valve 2122v2. This helps to ensure that the pressure inside the tank does not increase beyond the working pressure.

The storage tank 2100 has an inlet 2122i that is to receive hydrogen gas from one or more components creating excess hydrogen gas. In some embodiments, the one or more components may be hydrogen fuel cells or other systems installed on a vehicle. A valve 2122v1 is disposed between the flow line 2122l and the inlet 2122i to control the amount of hydrogen gas received within the storage tank 2100.

The storage tank 2100 is equipped with a level sensor 2118l designed to continuously or periodically monitor the level of cryogenic hydrogen within the tank. In some embodiments, this level sensor is to communicate electrically with a control unit on a vehicle. If the level of cryogenic liquid drops below a specified threshold, the sensor sends a signal to the control unit. Upon receiving this signal, a user of the vehicle is notified about the liquid hydrogen level in the storage tank.

In some embodiments, the storage tank 2100, the first pump 2300, the second pump 2400, the heating device 2200, the heat exchanger 2500, the slosh baffles 2120a-f, the low pressure flow of liquid hydrogen, and the high pressure flow of liquid hydrogen can be similar to or substantially the same as, the storage tank 1100, the first pump 1300, the second pump 1400, the heating device 1200, the heat exchanger 1500, the slosh baffles 1120, the low pressure flow of cryogenic liquid, the high pressure flow of cryogenic liquid, respectively, described above in connection with FIG. 1.

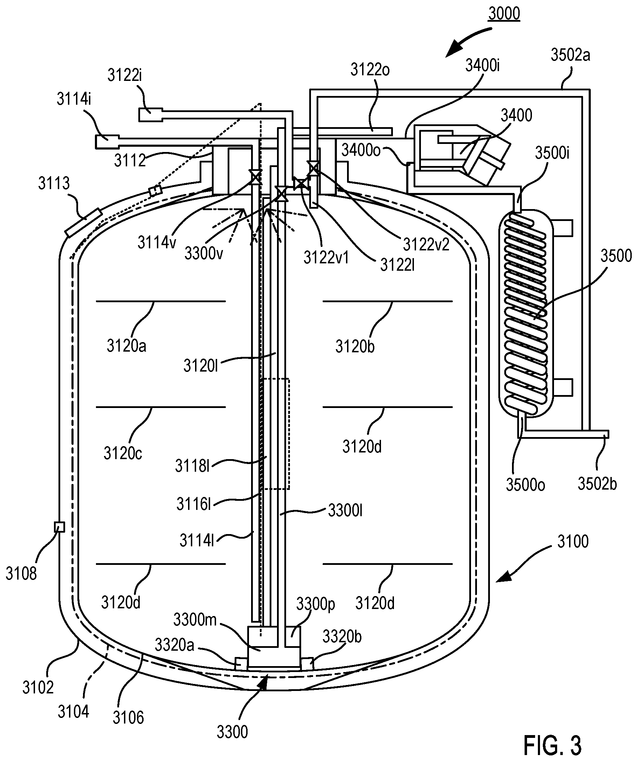

The system 3000 described with respect to FIG. 3 is similar to or substantially the same as the system 2000 described above with respect to FIG. 2. That is, in some embodiments, the storage tank 3100, the first pump 3300, the second pump 3400 (e.g., having inlet 3400i and outlet 3400o), the heating device 3200, the heat exchanger 3500, the slosh baffles 3120a-f, the low pressure flow of liquid hydrogen, and the high pressure flow of liquid hydrogen can be similar to or substantially the same as, the storage tank 2100, the first pump 2300, the second pump 2400, the heating device 2200, the heat exchanger 2500, the slosh baffles 2120a-f, the low pressure flow of cryogenic liquid, the high pressure flow of cryogenic liquid, respectively, described above in connection with FIG. 2.

However, the heating device 2200 shown in FIG. 2 is absent from the storage tank 3100. Additionally, system 3000 includes a vapor delivery line 3502 in fluid communication with the inner volume of storage tank 3100 and an outlet 3500o of the heat exchanger 3500 (which can have an inlet 3500i). In addition, the system 3000 has a vapor delivery line 3502 that is in fluid communication with the inner volume of the storage tank 3100 and an outlet 3500o of the heat exchanger 3500. The outlet 3500o of the heat exchanger 3500 has branched into two flow lines 3502a and 3502b. The flow line 3502b is to deliver a hydrogen gas to one or more hydrogen fuel cells. The flow line 3502a is to deliver a portion of a flow of hydrogen gas coming from the outlet 3500o of the heat exchanger 3500 into the inner volume of the storage tank 3100 such that an internal pressure of the storage tank 3100 can be maintained when liquid hydrogen is drawn from the storage tank 3100. That is, the flow line 3502b is to expand a hydrogen gas above the liquid hydrogen when the internal pressure of the hydrogen storage device drops below of certain level.

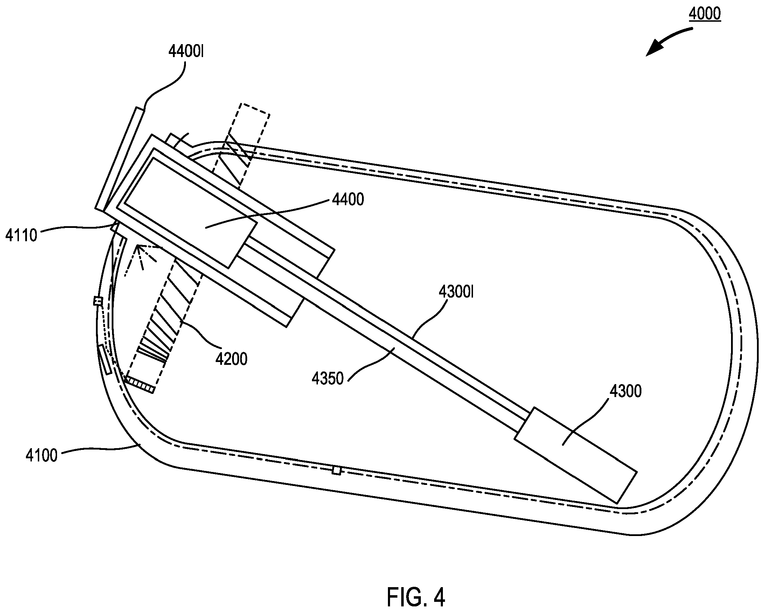

FIG. 4 is schematic illustrations of a storage and fuel delivery system 4000, according to an embodiment. The system 4000 includes a storage tank 4100 to store LH₂, a heating device 4200 within the storage tank 4100, a first pump 4300 to move the LH₂ out of the storage tank 4100, a second pump 4400 to boosts the pressure of the LH₂, and a manifold 4110. The heating device 4200 and the manifold 4110 are disposed on a same portion (e.g., same side or same corner) of the storage tank 4100, as shown in FIG. 4.

In some embodiments, the storage tank 4100, the heating device 4200, the first pump 4300, the second pump 4400, the manifold 4110 can be similar to or substantially the same as, the storage tank 1100, the heating device 1200, the first pump 1300, the second pump 1400, the manifold 1110, respectively, described above in connection with FIG. 1.

In some embodiments, the first pump 4300 and the second pump 4400 can be mechanically connected by a mechanical power takeoff shaft (PTO) 4350 such as a hydraulic prime mover, an engine/alternator shaft, a fan drive, or a diesel pump. This would eliminate the need for separate motors to drive the first pump 4300 and the second pump 4400, provided these components are spatially close to each other. A flow line 4300l can carry liquid hydrogen from the first pump 4300 to the second pump 4400 to boosts its pressure. In some embodiments, the flow line 4300l can carry low pressure flow of liquid hydrogen as described above with respect to FIG. 1. A flow line 4400l receives a high pressure flow of liquid hydrogen from the second pump 4400. In some embodiments, the high pressure flow of liquid hydrogen is similar to or substantially the same as the high pressure flow of liquid hydrogen described above with respect to FIG. 1.

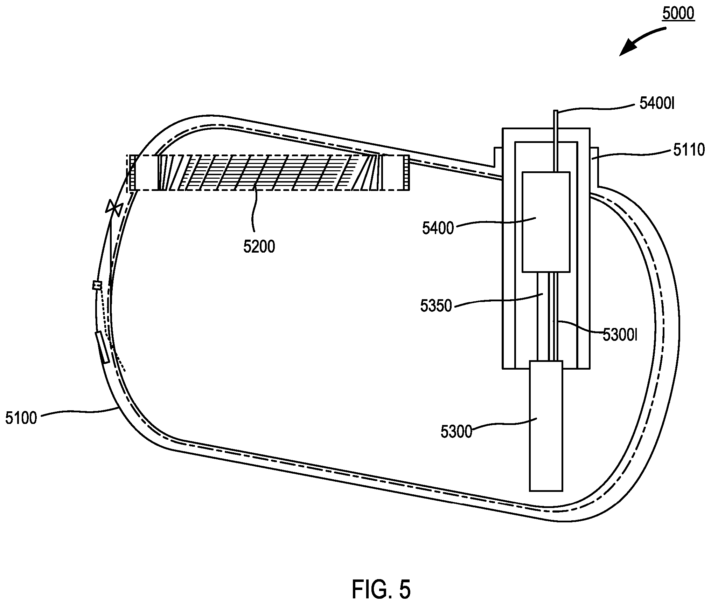

FIG. 5 is schematic illustrations of a storage and fuel delivery system 5000, according to an embodiment. The system 5000 includes a storage tank 5100 to store liquid hydrogen LH₂, a heating device 5200 within the storage tank 5100, a first pump 5300 to move the LH₂ out of the storage tank 5100, a second pump 5400 to boosts the pressure of the LH₂, and a manifold 5110. The heating device 5200 and the manifold 5110 are disposed on different portions (e.g., different sides or different corners) of the storage tank 5100, as shown in FIG. 5.

In some embodiments, the storage tank 5100, the heating device 5200, the first pump 5300, the second pump 5500, and a manifold 5110 can be similar to or substantially the same as, the storage tank 1100, the heating device 1200, the first pump 1300, the second pump 1400, and a manifold 1110, respectively, described above in connection with FIG. 1.

In some embodiments, the first pump 5300 and the second pump 5500 can be mechanically connected by a mechanical power takeoff shaft (PTO) 5350 such as a hydraulic prime mover, an engine/alternator shaft, a fan drive, or a diesel pump. A flow line 53001 can carry liquid hydrogen from the first pump 5300 to the second pump 5500 to boosts its pressure. In some embodiments, the flow line 53001 can carry low pressure flow of liquid hydrogen as described above with respect to FIG. 1. A flow line 5400l receives a high pressure flow of liquid hydrogen from the second pump 5500. In some embodiments, the high pressure flow of liquid hydrogen is similar to or substantially the same as the high pressure flow of liquid hydrogen described above with respect to FIG. 1.

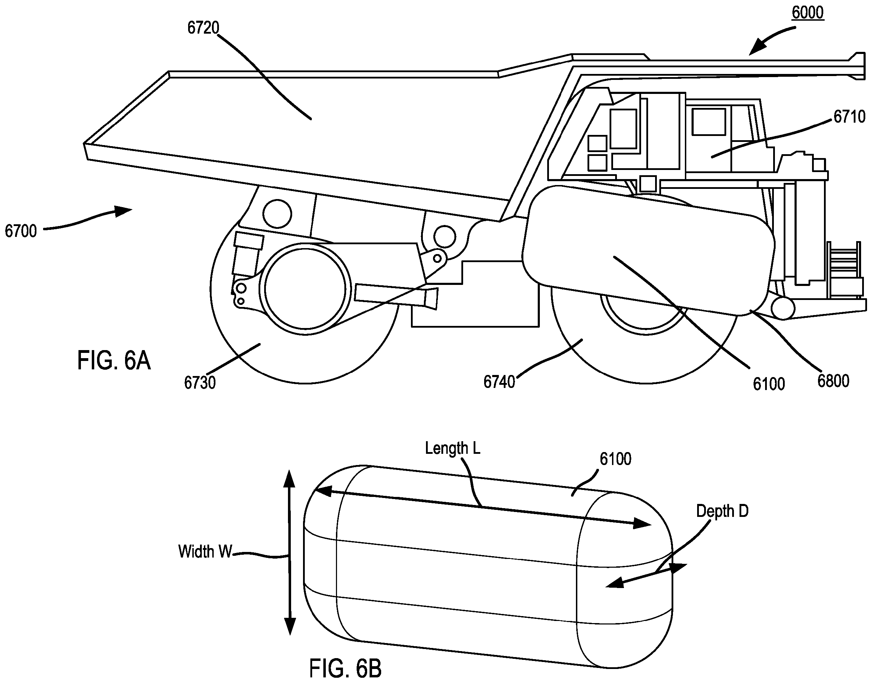

FIG. 6A is a perspective side view of a vehicle including a hydrogen storage tank 6100, according to an embodiment. The vehicle shown in FIG. 6A is a haul truck 6700 having a having a canopy 6720. A system 6000 includes the storage tank 6100 mounted to the haul truck 6700. FIG. 6B shows a schematic illustration of the storage tank 6100 installed on the haul truck 6700 as shown in FIG. 6A. The haul truck 6700 have a cab 6710 disposed on a deck above the front wheels 6740. In some embodiments, a power module (not shown) that is in fluid communication with the storage tank 6100 can be disposed within a side pocket or wheel pocket of a haul truck (e.g., a mining haul truck) between the front wheels 6740 and the rear wheels 6730.

The storage tank 6100 is to store liquid hydrogen at suitable pressure(s) and/or temperatures for supply to the haul truck 6700. As shown in FIG. 6A, in some embodiments, storage tank 6100 can be positioned between the cab 6710 and one of the front wheels 6740 of the haul truck 6700.

In some embodiments, the storage tank 6100 includes a single insulated hydrogen storage tank. In some embodiments, the storage tank 6100 can be to store liquid hydrogen at approximately 23.0 Kelvins. In some embodiments, the storage tank 6100 can hold up to, for example, about 100 kg of liquid hydrogen. In some embodiments, an internal volume of the storage tank 6100 can be at least about 3 m3, at least about 4 m3, at least about 5 m3, at least about 6 m3, at least about 7 m3, at least about 8 m3, at least about 9 m3, or at least about 10 m3. In some embodiments, the storage tank 6100 is capable of holding a desired amount of liquid hydrogen (e.g., an amount that allows the haul truck 6700 e.g., a mining haul truck to operate for at least about 24 hours before refueling). For example, the storage tank 6100 can be a single insulated tank with an exterior size and/or approximate volume that allows the storage tank 6100 to be disposed between the front wheels 6740.

In some embodiments, the storage tank 6100 can be mounted to the haul truck 6700 via a vehicle interface 6800 (actual structure is not shown) using at least one of bolt-on brackets, clamps, fasteners, welding, adhesive bonding, or specialized mounting systems like racks, platforms, scaffolding, and/or the like. The storage tank 6100 can be permanently mounted to, and/or otherwise integrated with, one or more structures of the haul truck 6700. Alternatively, the storage tank 6100 can be mounted to the haul truck 6700 such that the storage tank 6100 can be detached and/or removed from the haul truck 6700 (e.g., for maintenance of and/or any other suitable reason).

In some embodiments, the storage tank 6100, the haul truck 6700, and the power module can be similar to or substantially the same as, the storage tank 1100, the vehicle 1700, and the power module 1600, respectively, described above in connection with FIG. 1.

The storage tank 6100 can be formed into any desirable shape. As shown in FIG. 6B, in some embodiments, the storage tank 6100 has a length L (i.e., a dimension in the x-direction), a width W (i.e., a dimension in the z-direction), and a depth D (i.e., a dimension in the y-direction).

In some embodiments, the width W (e.g., diameter) of the storage tank 6100 can be at least about 0.5 meters (m), at least about 0.6 m, at least about 0.7 m, at least about 0.8 m, at least about 0.9 m, at least about 1.0 m, at least about 1.1 m, at least about 1.2 m, at least about 1.3 m, at least about 1.4 m, at least about 1.5 m, at least about 1.6 m, at least about 1.7 m, at least about 1.8 m, at least about 1.9 m, at least about 2.0 m, at least about 2.1 m, at least about 2.2 m, at least about 2.3 m, at least about 2.4 m, or at least about 2.5 m. In some embodiments, the width W of the storage tank 6100 can be no more than about 3.0 m, no more than about 2.9 m, no more than about 2.8 m, no more than about 2.7 m, no more than about 2.6 m, no more than about 2.5 m, no more than about 2.4 m, no more than about 2.3 m, no more than about 2.2 m, no more than about 2.1 m, no more than about 2.0 m, no more than about 1.9 m, no more than about 1.8 m, no more than about 1.7 m, no more than about 1.6 m, no more than about 1.5 m, no more than about 1.4 m, no more than about 1.3 m, no more than about 1.2 m, no more than about 1.1 m, no more than about 1.0 m, no more than about 0.9 m, no more than about 0.8 m, no more than about 0.7 m, no more than about 0.6 m, or no more than about 0.5 m. Combinations and/or ranges of the above-referenced widths are also possible (e.g., at least about 0.5 m and no more than about 3.0 m or at least about 1.0 m and no more than about 2.5 m), inclusive of all values and ranges therebetween.

In some embodiments, the length L (e.g., diameter) of storage tank 6100 can be at least about 0.5 meters (m), at least about 0.6 m, at least about 0.7 m, at least about 0.8 m, at least about 0.9 m, at least about 1.0 m, at least about 1.1 m, at least about 1.2 m, at least about 1.3 m, at least about 1.4 m, at least about 1.5 m, at least about 1.6 m, at least about 1.7 m, at least about 1.8 m, at least about 1.9 m, at least about 2.0 m, at least about 2.1 m, at least about 2.2 m, at least about 2.3 m, at least about 2.4 m, or at least about 2.5 m. In some embodiments, the length L of storage tank 6100 can be no more than about 3.0 m, no more than about 2.9 m, no more than about 2.8 m, no more than about 2.7 m, no more than about 2.6 m, no more than about 2.5 m, no more than about 2.4 m, no more than about 2.3 m, no more than about 2.2 m, no more than about 2.1 m, no more than about 2.0 m, no more than about 1.9 m, no more than about 1.8 m, no more than about 1.7 m, no more than about 1.6 m, no more than about 1.5 m, no more than about 1.4 m, no more than about 1.3 m, no more than about 1.2 m, no more than about 1.1 m, no more than about 1.0 m, no more than about 0.9 m, no more than about 0.8 m, no more than about 0.7 m, no more than about 0.6 m, or no more than about 0.5 m. Combinations and/or ranges of the above-referenced lengths are also possible (e.g., at least about 0.5 m and no more than about 3.0 m or at least about 1.0 m and no more than about 2.5 m), inclusive of all values and ranges therebetween.

In some embodiments, the depth D of storage tank 6100 can be at least about 1.0 meters (m), at least about 1.1 m, at least about 1.2 m, at least about 1.3 m, at least about 1.4 m, at least about 1.5 m, at least about 1.6 m, at least about 1.7 m, at least about 1.8 m, at least about 1.9 m, at least about 2.0 m, at least about 2.1 m, at least about 2.2 m, at least about 2.3 m, at least about 2.4 m, at least about 2.5 m, at least about 2.6 m, at least about 2.7 m, at least about 2.8 m, at least about 2.9 m, at least about 3.0 m, at least about 3.1 m, at least about 3.2 m, at least about 3.3 m, at least about 3.4 m, at least about 3.5 m, at least about 3.6 m, at least about 3.7 m, at least about 3.8 m, at least about 3.9 m, at least about 4.0 m, at least about 4.1 m, at least about 4.2 m, at least about 4.3 m, at least about 4.4 m, at least about 4.5 m, at least about 4.6 m, at least about 4.7 m, at least about 4.8 m, at least about 4.9 m, at least about 5.0 m, at least about 5.1 m, at least about 5.2 m, at least about 5.3 m, at least about 5.4 m, at least about 5.5 m, at least about 5.6 m, at least about 5.7 m, at least about 5.8 m, at least about 5.9 m, or at least about 6.0 m. In some embodiments, the depth D of storage tank 6100 can be no more than about 7.0 m, no more than about 6.9 m, no more than about 6.8 m, no more than about 6.7 m, no more than about 6.6 m, no more than about 6.5 m, no more than about 6.4 m, no more than about 6.3 m, no more than about 6.2 m, no more than about 6.1 m, no more than about 6.0 m, no more than about 5.9 m, no more than about 5.8 m, no more than about 5.7 m, no more than about 5.6 m, no more than about 5.5 m, no more than about 5.4 m, no more than about 5.3 m, no more than about 5.2 m, no more than about 5.1 m, no more than about 5.0 m, no more than about 4.9 m, no more than about 4.8 m, no more than about 4.7 m, no more than about 4.6 m, no more than about 4.5 m, no more than about 4.4 m, no more than about 4.3 m, no more than about 4.2 m, no more than about 4.1 m, no more than about 4.0 m, no more than about 3.9 m, no more than about 3.8 m, no more than about 3.7 m, no more than about 3.6 m, no more than about 3.5 m, no more than about 3.4 m, no more than about 3.3 m, no more than about 3.2 m, no more than about 3.1 m, no more than about 3.0 m, no more than about 2.9 m, no more than about 2.8 m, no more than about 2.7 m, no more than about 2.6 m, no more than about 2.5 m, no more than about 2.4 m, no more than about 2.3 m, no more than about 2.2 m, no more than about 2.1 m, no more than about 2.0 m, no more than about 1.9 m, no more than about 1.8 m, no more than about 1.7 m, no more than about 1.6 m, no more than about 1.5 m, no more than about 1.4 m, no more than about 1.3 m, no more than about 1.2 m, no more than about 1.1 m, or no more than about 1.0 m. Combinations and/or ranges of the above-referenced depths are also possible (e.g., at least about 1.0 m and no more than about 7.0 m or at least about 2.0 m and no more than about 6.0 m), inclusive of all values and ranges therebetween.

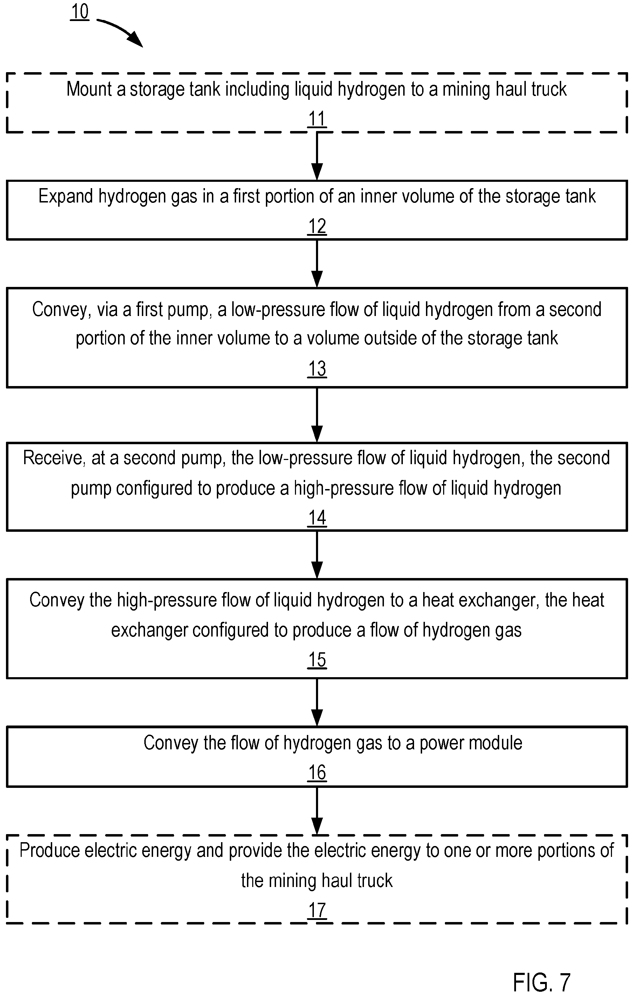

FIG. 7 shows a method 10 for storing and delivering hydrogen to a power module (e.g., a power module including one or more hydrogen fuel cells). The method 10 can be implemented, for example, in a fuel storage/delivery system of a hydrogen fuel cell-powered vehicle. More specifically, the vehicle can be an ultra-class vehicle such as a mining haul truck and/or the like. As shown in FIG. 7, in some implementations, the method 10 optionally includes, at step 11, mounting the storage tank to a support structure of a mining haul truck. In some implementations, the support structure can be included in and/or can be a structure of an engine bay of the mining haul truck otherwise to house and/or support a diesel powerplant.

The method 10 includes expanding hydrogen gas disposed in a first portion 1102 of an inner volume of the storage tank, at step 12. The expanding of the hydrogen gas can be operable to maintain an internal pressure of the storage tank at or above a predetermined threshold pressure. For example, the storage tank can contain a volume of liquid hydrogen (LH₂) in a second portion 1104 of the inner volume, and the storage/delivery system is to remove the LH₂ and deliver a flow of hydrogen to the power module. As the LH₂ is removed from the second portion 1104, the internal pressure in the storage tank decreases. The expansion of the hydrogen gas, however, increases the internal pressure of the storage tank, thereby compensating for and/or offset the pressure drop associated with the flow of LH₂ out of the storage tank. Thus, the expansion of the hydrogen gas in the first portion 1102 of the inner volume can be operable to maintain the internal pressure of the storage tank at or above the predetermined threshold pressure. In some embodiments, the predetermined threshold pressure can be between about 0.0 barg and about 10.0 barg. In some embodiments, the predetermined threshold pressure is at least 0.0 barg and no more than 10.0 barg. In some embodiments, the predetermined threshold pressure can be between about 1.0 barg and about 3.0 barg.

In some embodiments, expanding hydrogen gas can include heating the hydrogen gas disposed in the first portion 1102 of the inner volume of the storage tank to a temperature of at least about -250°C, at least about -245°C, at least about -240°C, at least about -235°C, at least about -230°C, at least about -225°C, at least about -220°C, at least about -215°C, at least about - 210°C, at least about -205°C, at least about -200°C, at least about -195°C, at least about -190°C, at least about -185°C, at least about -180°C, at least about -175°C, at least about -170°C, at least about -165°C, at least about -160°C, at least about -150°C, or at least about -150°C. In some embodiments, expanding hydrogen gas can include heating the hydrogen gas disposed in the first portion 1102 of the inner volume of the storage tank to a temperature of no more than about - 150°C, no more than about -155°C, no more than about -160°C, no more than about -165°C, no more than about -170°C, no more than about -175°C, no more than about -180°C, no more than about -185°C, no more than about -190°C, no more than about -195°C, no more than about -200°C, no more than about -205°C, no more than about -210°C, no more than about -215°C, no more than about -220°C, no more than about -225°C, no more than about -230°C, no more than about -235°C, no more than about -240°C, no more than about -245°C, or no more than about -250°C. Combinations and/or ranges of the above-referenced temperatures are also possible (e.g., at least about -250°C and no more than about -150°C), inclusive of all values and ranges therebetween.

In some embodiments, expanding hydrogen gas includes receiving hydrogen gas from a vapor delivery line into the first portion 1102 of the inner volume of the storage tank via a port of the storage tank. The port is in fluid communication with the first portion 1102 of the inner volume. In some embodiments, the vapor delivery line is in fluid communication with an outlet of a heat exchanger, as described in further detail herein.

At step 13, a low pressure flow of LH₂ is conveyed, via a first pump, from the second portion 1104 of the inner volume of the storage tank to a volume outside of the storage tank. The second portion 1104 of the inner volume can be, for example, below the first portion 1102 of the inner volume. As such, the first portion 1102 can form a headspace in the inner volume that contains gaseous hydrogen above the volume of LH₂ in the second portion 1104 of the inner volume.

The first pump can be similar to and/or substantially the same as any of the first pumps described herein. For example, the first pump can be a relatively small, low-speed pump to provide a low pressure flow of LH₂ while minimizing an amount of waste heat transferred to the LH₂ as a result of operating the pump. In some embodiments, the first pump can be, for example, a centrifugal pump and/or any other suitable pump.

At step 14, the low pressure flow of LH₂ can be received from the first pump into a second pump, which in turn, can be used to produce a high pressure flow of LH₂. For example, the second pump can be a relatively large, relatively high-speed / high-displacement pump to produce a high pressure flow of LH₂. The second pump is larger than the first pump and is to output a flow of LH₂ at higher pressures than the output of the first pump. In some embodiments, the delivery of the low pressure flow of LH₂ from the first pump to the second pump can boost a net positive suction head (NPSH) for the second pump, which in turn, can reduce a likelihood of cavitation. In some embodiments, the second pump can be, for example, a positive displacement pump such as an axial displacement pump and/or the like.

At step 15, the high pressure flow of LH₂ is conveyed to a heat exchanger outside of the storage tank. The heat exchanger can be any suitable heat exchanger such as any of those described above. The working fluid circulating through the heat exchanger is to heat the LH₂ to produce a high pressure flow of hydrogen gas, which is conveyed to the power module, at step 16.

In some embodiments, the heat exchanger can be to raise a temperature of the hydrogen to a temperature of at least about -20°C, at least about -15°C, at least about -10°C, at least about - 5°C, at least about 0°C, at least about 5°C, at least about 10°C, at least about 15°C, at least about 20°C, at least about 25°C, at least about 30°C, at least about 35°C, or at least about 40°C. In some embodiments, the heat exchanger can be to raise a temperature of the hydrogen to a temperature of no more than about 50°C, no more than about 45°C, no more than about 40°C, no more than about 35°C, no more than about 30°C, no more than about 25°C, no more than about 20°C, no more than about 15°C, no more than about 10°C, no more than about 5°C, no more than about 0°C, no more than about -5°C, no more than about -10°C, no more than about -15°C, or no more than about -20°C. Combinations and/or ranges of the above-referenced temperatures are also possible (e.g., at least about -20°C and no more than about 50°C), inclusive of all values and ranges therebetween.

In some embodiments, a portion of the LH₂ may evaporate and/or boil-off as the LH₂ flows through the heat exchanger. Moreover, the boil-off or evaporated hydrogen (now in the form of low pressure hydrogen gas) can be conveyed back into the storage tank, which in turn, can act to increase the internal pressure in the storage tank. At step 17, the method 10 optionally includes producing electric energy and providing the electric energy to one or more portions of the mining haul truck.

In some embodiments, the storage tank, the first pump, the second pump, the heat exchanger, the low pressure flow of LH₂, the high pressure flow of LH₂, the vehicle, and the power module can be similar to or substantially the same as, the storage tank 1100, the first pump 1300, the second pump 1400, the heat exchanger 1500, the low pressure flow of cryogenic liquid, the high pressure flow of cryogenic liquid, the vehicle 1700, and the power module 1600, respectively, described above in connection with FIG. 1.

Some embodiments and/or methods described herein can include computing devices, processing devices, controllers, and/or other electronic devices. Such devices can include hardware, software (executed on hardware), or a combination thereof. Hardware modules may include, for example, a general-purpose processor, an FPGA, an ASIC, and/or the like. Software modules (executed on hardware) can be expressed in a variety of software languages (e.g., computer code), including C, C++, Java^{™}, Ruby, Visual Basic^{™}, Python^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools, and/or combinations thereof (e.g., Python^{™}). Additional examples of computer code include, but are not limited to, control signals, encrypted code, and compressed code.

Some embodiments described herein relate to and/or otherwise include a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

While various schematics, embodiments, and/or implementations have been described above, it should be understood that they have been presented by way of example only, and not limitation. Various modifications, changes, and/or variations in form and/or detail may be made without departing from the scope and/or spirit of the disclosure and/or without altering the function and/or advantages thereof unless expressly stated otherwise. Likewise, while embodiments (and/or features, components, configurations, aspects, etc. thereof) may be described above in the context of certain implementations, it should be understood that such implementations are presented by way of example only, and not limitation. Any of the embodiments (and/or features, components, configurations, aspects, etc. thereof) can be used in, and/or adapted for use in, other implementations unless expressly stated otherwise. Functionally equivalent embodiments, implementations, and/or methods, in addition to those described herein, will be apparent to those skilled in the art from the foregoing descriptions and are intended to fall within the scope and/or spirit of the disclosure.

Where schematics, embodiments, and/or implementations described above indicate certain components arranged in certain orientations, configurations, or positions, the arrangement of components may be modified. Although various embodiments have been described as having particular features, configurations, and/or combinations of components, other embodiments are possible having a combination of any features, configurations, and/or components from any of embodiments described herein, except mutually exclusive combinations. The embodiments described herein can include various combinations and/or sub-combinations of the functions, components, configurations, and/or features of the different embodiments described.

The specific configurations of the various components can also be varied. For example, the size and specific shape of the various components can be different from the embodiments shown, while still providing the functions as described herein. More specifically, the size and shape of the various components can be specifically selected for a desired or intended usage. Thus, it should be understood that the size, shape, and/or arrangement of the embodiments and/or components thereof can be adapted for a given use unless the context explicitly states otherwise.

Where methods described above indicate certain events and/or procedures occurring in certain order, the ordering of certain events and/or procedures may be modified. Additionally, certain of the events and/or procedures may be performed concurrently in a parallel process, when possible, as well as performed sequentially as described above. While methods have been described as having particular steps and/or combinations of steps, other methods are possible having a combination of any steps from any of methods described herein, except mutually exclusive combinations and/or unless the context clearly states otherwise.

## Claims

1. A system for storage hydrogen pressure management, comprising:
a hydrogen storage tank to store liquid hydrogen, the hydrogen storage tank defining an inner volume having a first portion and a second portion;
a thermal device disposed within the first portion of the inner volume and affixed to at least one inner wall of the hydrogen storage tank;
a first pump disposed within the second portion of the inner volume, the first pump to receive liquid hydrogen from the second portion when liquid hydrogen is stored in the hydrogen storage tank and to pump the liquid hydrogen out of the hydrogen storage tank to produce a low pressure flow of liquid hydrogen; and
a second pump disposed outside of the hydrogen storage tank, the second pump to receive the low pressure flow of liquid hydrogen from the first pump and to produce a high pressure flow of liquid hydrogen.

2. The system of claim 1, wherein the hydrogen storage tank is structured such that the first portion of the inner volume stores gaseous hydrogen and the second portion of the inner volume stores the liquid hydrogen.

3. The system of claim 1 or claim 2, wherein the hydrogen storage tank is to store, within the second portion of the inner volume, at least one of cryogenic liquid hydrogen or subcooled liquid hydrogen; and optionally wherein the hydrogen storage tank is to store the liquid hydrogen at a pressure of about 10 bar or less, and the second pump is to product the high pressure flow to a pressure of about 20 bar or greater.

4. The system of any one of the preceding claims, wherein at least one of:
the thermal device includes an induction heater; and
the first pump is a centrifugal pump.

5. The system of any one of the preceding claims, wherein the first pump is positioned in the hydrogen storage tank to be submerged within liquid hydrogen when liquid hydrogen is stored in the hydrogen storage tank.

6. The system of any one of the preceding claims, further comprising a manifold coupled with the inner volume.

7. The system of any one of the preceding claims, wherein the second pump is a positive displacement pump, the positive displacement pump comprising at least one of a gear pump, a vane pump, a screw pump, a lobe pump, a scroll pump, a single piston pump, a triplex piston pump, a radial piston pump, an axial piston pipe, a bent axis pump, and a linear drive piston pump.

8. The system of any one of the preceding claims, wherein the hydrogen storage tank comprises one or more walls comprising a first inner layer, a second inner layer, and an outer wall on the second inner layer;
and optionally, wherein the hydrogen storage tank has an internal pressure of about 1.5 bar or less.

9. The system of any one of the preceding claims, wherein the first pump is to operate at a first speed and the second pump is to operate at a second speed, the second speed being greater than the first speed.

10. The system of any one of the preceding claims, wherein the low pressure flow of liquid hydrogen has a pressure between about 2 bar and about 10 bar, and the high pressure flow of liquid hydrogen has a pressure between about 20 bar to about 450 bar.

11. The system of any one of the preceding claims, further comprising a pressure relief mechanism in fluid communication with the inner volume, the pressure relief mechanism comprising at least one of a disc or a valve.

12. The system of any one of the preceding claims, further comprising:
a heat exchanger to receive the high pressure flow of liquid hydrogen from the second pump, the heat exchanger disposed downstream of the second pump, wherein the heat exchanger is to output a high pressure flow of hydrogen gas for delivery to at least one hydrogen fuel cell, and a low pressure flow of hydrogen gas for delivery to the hydrogen storage tank.

13. A system for stored hydrogen pressurization, comprising:
a system for storage hydrogen pressure management as claimed in claim 1; and
a heat exchanger to receive the high pressure flow of liquid hydrogen from the second pump, the heat exchanger disposed outside of the hydrogen storage tank.

14. A method of pressurizing hydrogen for vehicle power, comprising:
expanding a hydrogen gas disposed in a first portion of an inner volume of a storage tank to maintain an internal pressure of the storage tank above a predetermined pressure value;
conveying a low pressure flow of liquid hydrogen from a second portion of the inner volume of the storage tank to a volume outside of the storage tank via a first pump, the second portion of the inner volume being below the first portion of the inner volume;
receiving, at a second pump, the low pressure flow of liquid hydrogen from the first pump, the second pump to produce a high pressure flow of liquid hydrogen;
conveying the high pressure flow of liquid hydrogen to a heat exchanger to produce a flow of hydrogen gas; and
conveying the flow of hydrogen gas to a power module of a vehicle, the power module including a plurality of hydrogen fuel cells.

15. The method of claim 14, wherein expanding the hydrogen gas includes receiving a flow of hydrogen gas from a vapor delivery line into the first portion of the inner volume of the storage tank via a port disposed on a top portion of the storage tank, the port being in fluid communication with the first portion of the inner volume;
and optionally, wherein the method further comprises
producing electric energy via the power module; and
providing the electric energy to one or more portions of the vehicle, wherein the vehicle is a mining haul truck.
